(19) **Europäisches Patentamt / European Patent Office / Office européen des brevets**

(11) **EP 4 582 512 A1**

(12) # EUROPEAN PATENT APPLICATION

(43) Date of publication:
**09.07.2025 Bulletin 2025/28**

(21) Application number: **24192594.0**

(22) Date of filing: **02.08.2024**

(51) International Patent Classification (IPC):
*C10B 53/07* [(2006.01)]    *C10B 7/02* [(2006.01)]
*C10B 19/00* [(2006.01)]    *C10B 49/02* [(2006.01)]
*C10J 3/62* [(2006.01)]    *C09C 1/48* [(2006.01)]
*F27B 9/14* [(2006.01)]    *F27B 9/18* [(2006.01)]
*F27D 3/04* [(2006.01)]    *F27B 9/06* [(2006.01)]

(52) Cooperative Patent Classification (CPC):
**C09C 1/48; B03D 1/00; B03D 1/008; B03D 1/02;
B03D 1/023; C09C 1/482; C09C 1/50; C10B 7/02;
C10B 19/00; C10B 49/02; C10B 53/07; C10J 3/00;
C10J 3/62; F27B 9/062; F27B 9/142;**    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   05.01.2024   EP 24150495
         05.01.2024   EP 24150490
         05.01.2024   EP 24150491
         05.01.2024   EP 24150493
         05.01.2024   EP 24150494
         05.01.2024   EP 24150497
         05.01.2024   EP 24150498

(71) Applicant: **Orion Engineered Carbons GmbH
65760 Eschborn (DE)**

(72) Inventors:
- **BOWLES, Alexander**
 **50939 Köln (DE)**
- **DETERS, David**
 **53173 Bonn (DE)**
- **SCHINKEL, Arndt-Peter**
 **56112 Lahnstein (DE)**
- **STANYSCHÖFSKY, Michael**
 **50354 Hürth (DE)**
- **TIMMERMANS, Eddy**
 **50354 Hürth (DE)**
- **WIDJAJA, Andreas**
 **64521 Groß-Gerau (DE)**

(74) Representative: **f & e patent
Braunsberger Feld 29
51429 Bergisch Gladbach (DE)**

(54) **CARBON BLACK PRODUCTION FROM RUBBER IN A MULTIPLE HEARTH PYROLYSIS AND GASIFICATION FURNACE**

(57)      The present invention relates to multi-layered pyrolysis reactor for the heat treatment of a rubber granulate. The multi-layered pyrolysis reactor has a pyrolysis zone and a gasification.

FIG. 2

**(Cont. next page)**

EP 4 582 512 A1

(52) Cooperative Patent Classification (CPC): (Cont.)
**F27B 9/185; F27D 3/04;** B03D 2201/02;
B03D 2203/08; C10J 2300/094; C10J 2300/0969;
C10J 2300/0976; C10J 2300/1223;
C10J 2300/1253

EP 4 582 512 A1

**Description**

**TECHNICAL FIELD**

The present invention relates to multi-layered pyrolysis reactor for the heat treatment of a rubber granulate. The multi-layered pyrolysis reactor has a pyrolysis zone and a gasification.

**TECHNICAL BACKGROUND**

Carbon blacks have numerous uses such as a reinforcing agent or filler for the rubber and tire industries. Moreover, carbon black has seen increased use in other areas such as coloring agents and reprographic toners for copying machines. The various applications of carbon black necessitate a diverse range of carbon black characteristics such as particle size, structure, yield, surface area, and stain.

Recycled blacks are carbon blacks typically obtained from end-of-life products containing carbon black, such as scrap tires (waste tires), and obtained by recycling processes. Production of recycled blacks typically involves 1 to 3 processes. Firstly, a pyrolysis step is deployed to decompose organic components such as rubbers or plastics. Secondly, an optional demineralization step is deployed to dissolve inorganic additives or impurities. Thirdly, the resulting material is milled to produce a controlled particle size distribution.

Tire pyrolysis of end-of-life products containing carbon black is usually carried out at low temperatures and produces a liquid, gaseous and solid fraction. The liquid fraction can then be used to produce new or virgin carbon black in an entrained flow reactor such as a furnace reactor. US 2002/0117388 A1 relates to the pyrolysis of waste rubber materials, including scrap tires. The obtained carbon black is generally referred to as "recovered carbon black" (rCB).

rCB is a complex mixture resulting from the compounds used in pyrolysis. The compounds used in the pyrolysis process may contain various components (i.e. ash) other than carbon black, such as inorganic additives and fillers (e.g., zinc oxide, silicon oxide, sulphur compounds, and calcium carbonate) and traces of steel.

However, the performance of rCB is generally poor compared to carbon black produced from e.g. a standard hydrocarbon feedstock such as oil. Accordingly, it is desired to produce carbon black from rubber granulate in which the produced carbon black has improved properties.

It has been surprisingly found that the pyrolysis of rubber granulate, and subsequent gasification of the material lead to an improved carbon black compared to rCB. This can be beneficially done in a multi-layered pyrolysis reactor according to the invention.

**SUMMARY OF THE INVENTION**

The present invention relates to a multi-layered pyrolysis reactor (100) for the heat treatment of a rubber granulate (101), having a pyrolysis zone (180) and a gasification zone (182), wherein the reactor (100) comprises: (A) multiple hearths (130, 131), (B) a rotating central shaft (112), (C) rabble arms (140) provided with rabble tines (141) above each hearth (130, 131) and rotated by the rotating central shaft (112), the at least one rabble arm (140) and multiple hearths (130, 131) are configured to transfer the material radially along each hearth in an alternating inward and outward direction to affect a downward cascading of the material from one hearth to the next hearth therebelow, (D) an upper inlet (110) for the rubber granulate (101) configured to provide rubber granulate on the uppermost hearth, (E) a heating unit (170), wherein the heating unit (170) is configured to heat the material to 360 to 740 °C in the pyrolysis zone (180), wherein the heating unit (170) is selected from an electrical heating unit (170) and/or a microwave heating unit, (F) a burner (173) for each hearth in the gasification zone (182), configured to heat the material to 750 to 950 °C.

Furthermore, the present invention relates to a method for the heat treatment of a rubber granulate using a reactor according to the invention, comprising pyrolysis of rubber granulate at a temperature of 360 °C to 740 °C and in the absence of oxygen, wherein a pyrolysis gas stream and a pyrolyzed carbon black-containing particulate is obtained, gasification of the pyrolyzed carbon black-containing particulate at a temperature of 750 °C to 950 °C, obtaining treated carbon black after the gasification.

In addition, the present invention relates to the use of the reactor according to the invention for the pyrolysis of rubber granulate and the subsequent gasification.

Moreover, the present invention relates to a treated carbon black, wherein the treated carbon black has a cumulative pore volume for pore sizes of 0.3 to 0.75 nm of 0.008 to 0.035 $cm^3$/g, preferably 0.009 to 0.025 $cm^3$/g, more preferably 0.0101 to 0.020 $cm^3$/g, even more preferably 0.011 to 0.0185 $cm^3$/g, and most preferably 0.011 to 0.015 $cm^3$/g, wherein the cumulative pore volume is determined as mentioned in the specification.

Furthermore, a rubber article is provided comprising carbon black comprising coke, wherein the rubber article has a topography relative peak area of less than 10 %, preferably less than 5 %, more preferably less than 2 %, and most preferably less than 1 %, wherein the topography relative peak area is measured as described in the specification.

## BRIEF DESCRIPTION OF THE DRAWINGS

Figure 1 (FIG. 1): Multi-layered pyrolysis reactor 1
Figure 2 (FIG. 2): Multi-layered pyrolysis reactor 2

## DETAILED DESCRIPTION

It must be noted that, as used in the specification and the appended claims, the singular forms "a," "an" and "the" include plural referents unless the context clearly dictates otherwise. Thus, for example, reference to "an oxygen-containing gas" includes mixtures of oxygen-containing gases, reference to "a fuel" includes mixtures of two or more such fuels, and the like.

As used herein, the term "comprising" is understood to be open-ended and to not exclude the presence of additional undescribed or unrecited elements, materials, ingredients or method steps etc. The terms "including", "containing" and like terms are understood to be synonymous with "comprising". As used herein, the term "consisting of" is understood to exclude the presence of any unspecified element, ingredient or method step etc.

Unless indicated to the contrary, the numerical parameters and ranges set forth in the following specification and appended claims are approximations. Notwithstanding that the numerical ranges and parameters setting forth the broad scope of the invention are approximations, the numerical values set forth in the specific examples are reported as precisely as possible. Any numerical values, however, contain errors necessarily resulting from the standard deviation in their respective measurement.

Also, it should be understood that any numerical range recited herein is intended to include all subranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g., 1 to 6.3, or 5.5 to 10, or 2.7 to 6.1.

All parts, amounts, concentrations etc. referred to herein are by weight, unless specified otherwise. If no basis for parts, amounts, concentrations etc. are indicated, the parts, amounts, concentrations etc. are based on the respective composition/atmosphere/gas in which the respective material/parameter etc. is present.

The expression "feedstock" refers to the feedstock for the treatment of rubber granulate. According to the present invention, rubber granulate is used for the treatment. The expression or abbreviation feedstock used in the present disclosure refers to the rubber granulate.

"Carbon black" as referred to herein means a material composed substantially, e.g. to more than 50 wt.%, or more than 70 wt.% or more than 80 wt.%, based on its total weight of carbon that is produced by pyrolysis or radical driven abstraction of not carbon atoms of a carbon black feedstock. Different industrial processes are known for the production of carbon blacks such as the furnace process, gas black process, acetylene black process, thermal black process or lamp black process. The production of carbon blacks is per se well known in the art and for example outlined in J.-B. Donnet et al., "Carbon Black:Science and Technology", 2nd edition, therefore being not described herein in more detail. However, it is possible that "carbon black" comprises impurities as mentioned further below.

As used herein, the term "rubber articles" refers to articles composed of rubber, e.g., composed of at least 40 wt.-% of rubber, based on the total weight of the rubber article. Examples of rubber articles include, but are not limited to, tires, conveyer belts, gaskets, such as door gaskets, drive belts, floor mats, shoe soles, belts, cable sheaths, hoses, and the like. Preferred rubber articles include tires. The term "rubber" includes both natural and synthetic rubbers or mixtures thereof. Natural rubber (polyisoprene) may be obtained from rubber trees (Helvea brasiliensis), guayule, and dandelion. Synthetic rubber may comprise styrene-butadiene rubber such as emulsion-styrene-butadiene rubber and solution-styrene-butadiene rubber, polybutadiene, polyisoprene, ethylene-propylene-diene rubber, ethylene-propylene rubber, butyl rubber, halogenated butyl rubber, chlorinated polyethylene, chlorosulfonated polyethylene, acrylonitrile-butadiene rubber, hydrogenated acrylonitrile-butadiene rubber, polychloroprene, acrylate rubber, ethylene-vinylacetate rubber, ethylene-acrylic rubber, epichlorohydrin rubber, silicone rubber, fluorosilicone rubber, fluorocarbon rubber or mixture of combinations of any of the foregoing.

The expression "reactor" refers to the multi-layered pyrolysis reactor.

The expression "material" refers to the material that is treated, such as the material that is subjected to gasification after the pyrolysis step.

The present invention relates to a multi-layered pyrolysis reactor (100) for the heat treatment of a rubber granulate (101), having a pyrolysis zone (180) and a gasification zone (182), wherein the reactor (100) comprises: (A) multiple hearths (130, 131), (B) a rotating central shaft (112), (C) rabble arms (140) provided with rabble tines (141) above each hearth (130, 131) and rotated by the rotating central shaft (112), the at least one rabble arm (140) and multiple hearths (130, 131) are configured to transfer the material radially along each hearth in an alternating inward and outward direction to affect a downward cascading of the material from one hearth to the next hearth therebelow, (D) an upper inlet (110) for the rubber granulate (101) configured to provide rubber granulate on the uppermost hearth, (E) a heating unit (170), wherein the heating unit (170) is configured to heat the material (rubber granulate) to 360 to 740 °C in the pyrolysis zone (180), wherein the heating unit (170) is selected from an electrical heating unit (170) and/or a microwave heating unit, (F) a burner (173) for each hearth in the gasification zone (182), configured to heat the material to 750 to 950 °C. A major benefit of a multi-layered pyrolysis reactor is that the pyrolysis and gasification can occur in the same reactor. This has vastly lower heat losses when compared to doing the pyrolysis and gasification steps in separate reactors.

It is intended that the pyrolysis zone is above the gasification zone. In other words, upper hearths are used for the pyrolysis and the lower hearts are used for the gasification. For instance, hearths 1 to 2 are used for the pyrolysis and hearths 3 to 6 are used for the gasification.

The pyrolysis of rubber articles generally involves heating the rubber articles to temperatures, e.g., of at least 360 °C in the absence of oxygen in order to volatilize and decompose the rubber articles, producing oil, gas (pyrolysis gas), and char. The expression "pyrolyzed carbon black-containing particulate" is used for the expression "char" alternatively.

The pyrolysis (a) and gasification (b) can be carried out as a continuous process. The pyrolysis (a) and gasification (b) are carried out in a multi-layered pyrolysis reactor, such as a multiple hearth furnace. In a multi-layered pyrolysis reactor, the pyrolysis is generally performed in the pyrolysis zone of the reactor and the gasification is performed in the gasification zone of the reactor. Accordingly, the entire process is a continuous process wherein the material after the pyrolysis is subjected directly to the gasification, i.e. both processes are carried out in one reactor. Thus, the reactor is usually configured that the material is subjected to the pyrolysis and then, to the gasification.

Accordingly, it is desired to use a multiple hearth furnace for the pyrolysis and gasification of rubber granulate, such as waste tire rubber granulate.

The reactor comprises can comprise a steam inlet (174) provided at the lowermost hearth in the gasification zone (182). Accordingly, it is desired that the steam inlet is provided at the lowermost hearth of the reactor. The steam inlet can comprise multiple steam inlets. The multiple steam inlets can be evenly and circumferentially. It is intended that the provided steam can be evenly distributed in hearths.

It should be noted that each hearth can define a separate reaction chamber. Thus, a separate reaction chamber is defined bas the space between two hearths. For instance, the lowermost hearth 6 and the hearth 5 defines a separate reaction chamber that is the separate reaction chamber of hearth 6. Instead of referring to the reaction chamber of a specific hearth, reference is made to a hearth, such as a specific hearth. In other words, the gaseous atmosphere in hearth 6 means the gaseous atmosphere in the separate reaction chamber of hearth 6.

The multi-layered pyrolysis reactor (100) can be a multiple hearth furnace (100).

The reactor can comprise 2 to 20 hearths, preferably 4 to 15 hearths, more preferably 6 to 12 hearths, even more preferably 6 to 10 hearths, and most preferably 7 to 8 hearths. It is preferred that the ratio of hearths for the pyrolysis to the hearths of gasification is 1:2 to 1:5, such as 1:3 to 1:4, 1:2, 1:3, or 1:4.

The pyrolysis zone can be the zone in which the heating unit (170) heats the material on each hearth to 360 to 740 °C, and/or gasification zone is the zone in which the burner(s) heat(s) the material on each hearth to 750 to 950 °C. As mentioned above, it is desired that the gasification zone is below the pyrolysis zone.

The heating unit (170) can be an electrical heating unit (170), preferably wherein pyrolysis zone is the zone in which the electrical heating unit (170) heats the material on each hearth to 360 to 740 °C. The gasification zone can be the zone in which the burner(s) heat(s) the material on each hearth to 750 to 950 °C. It is desired that no burner, such as hydrogen burner or natural gas burner, is present in the pyrolysis zone.

The uppermost hearth can define the pyrolysis zone, preferably in which the electrical heating unit heats the material on each hearth to 360 to 740 °C. The two uppermost hearths can define the pyrolysis zone, preferably in which the electrical heating unit heats the material on each hearth to 360 to 740 °C. The three uppermost hearths can define the pyrolysis zone, preferably in which the electrical heating unit heats the material on each hearth to 360 to 740 °C. The four uppermost hearths can define the pyrolysis zone, preferably in which the electrical heating unit heats the material on each hearth to 360 to 740 °C.

The heating unit can be an electrical heating unit. The electrical heating unit can comprise an electrical heating unit that is inside the reaction chamber and an electrical heating unit that is positioned outside the reactor.

The electrical heating unit that is inside the reaction chamber can be an electrical heating element that is positioned above the rabble arms in the pyrolysis zone. It is intended that the electrical heating unit is positioned above each rabble arms on each hearth. Said electrical heating unit can provide the necessary temperature for the pyrolysis.

In a preferred embodiment, the electrical heating unit comprises an electrical heating unit that is inside the reaction chamber and an electrical heating unit that is positioned outside the reactor.

The electrical heating unit can be configured to provide heated inert gas, such as heated nitrogen, to each hearth in the pyrolysis zone to heat the material to 360 to 740 °C.

The lowermost hearth can define the gasification zone, preferably in which the burner (173) for each hearth heats the material on each hearth to 750 to 950 °C. The two lowermost hearths can define the gasification zone, preferably in which the burner (173) for each hearth heats the material on each hearth to 750 to 950 °C. The three lowermost hearths can define the gasification zone, preferably in which the burner (173) for each hearth heats the material on each hearth to 750 to 950 °C. The four lowermost hearths can define the gasification zone, preferably in which the burner (173) for each hearth heats the material on each hearth to 750 to 950 °C. The five lowermost hearths can define the gasification zone, preferably in which the burner (173) for each hearth heats the material on each hearth to 750 to 950 °C. The six lowermost hearths can define the gasification zone, preferably in which the burner (173) for each hearth heats the material on each hearth to 750 to 950 °C. The seven lowermost hearths can define the gasification zone, preferably in which the burner (173) for each hearth heats the material on each hearth to 750 to 950 °C. A buffer hearth can be present defining a buffer zone between the pyrolysis zone and the gasification zone. It is possible that more than one buffer hearth is present. The buffer hearth can be heated, preferably to a temperature between the temperature of the pyrolysis hearths and the gasification hearths.

The heating unit (170) can comprise microwave heating unit, wherein a microwave heating unit is present for each hearth in the pyrolysis zone (180), configured to heat the material to 360 to 740 °C. It is desired that the microwave hearting unit can directly heat the material on each hearth. Thus, the microwave hearting unit can be configured directly heat the material on each hearth.

The microwave heating unit is generally configured to assist the heating of the material to be treated. It is desired that the heating unit comprises an electrical heating unit as well as a microwave heating unit. The electrical heating unit generally heats a gas stream, comprising nitrogen or consisting of nitrogen, and the heated gas stream is subjected to the reactor. The microwave can additionally heat the material to be treated so that the desired temperature for the pyrolysis can be achieved.

The reactor can comprise a steam outlet (175) on the uppermost hearth of the buffer zone (181) and/or on the uppermost hearth of the gasification zone (182).

The reactor can comprise a steam outlet (175) that is configured to remove steam before the steam reaches the pyrolysis zone (180). The reactor can comprise a steam outlet (175) that is configured to remove gaseous atmosphere of the gasification zones. It is intended that most of the gaseous atmosphere of the gasification zones is removed.

The reactor can comprise a steam outlet (175) that is positioned on the uppermost hearth for the gasification. The steam outlet (175) is preferably positioned below a hearth that has the opening (133) distal to the rotating central shaft (112). This allows a more efficient removal of the gasification gases.

Each burner (173) for each hearth in the gasification zone (182) can be a hydrogen-oxygen burner.

The reactor can have a cylindrical form, such as a cylindrical basic shape, cylindrical cross-section.

The hearths (130, 131) alternately and respectively can have an opening (132) proximal to the rotating central shaft (112) and an opening (133) distal to the rotating central shaft (112) so as to give the material to be treated a spiral path along the height of the furnace.

A buffer gases outlet (176) can be provided in the buffer zone (181), preferably the buffer gases outlet (176) removes the gases in the buffer zone before the gases reaches the pyrolysis zone (180).

A pyrolysis gases outlet (177) can be provided in the buffer zone (180), preferably the pyrolysis gases outlet (177) removes the gases in the pyrolysis zone (180).

The number of rabble arms (140) above each hearth (130, 131)

(i) can be from 1 to 5, preferably 1 to 4, such as 1, 2, 3, or 4, and/or
(ii) in the pyrolysis zone can be 1 to 5, preferably 2 to 4, most preferably 3 to 4, and/or
(ii) in the buffer zone can be 1 to 5, preferably 2 to 4, most preferably 3 to 4, and/or
(ii) in the gasification zone can be 1 to 5, preferably 1 to 2, most preferably 1.

The reactor can comprise means to use the gasification gases to heat the material to 750 to 950 °C.

Furthermore, a method for the heat treatment of rubber granulate using a reactor according to the invention is provided, comprising pyrolysis of rubber granulate at a temperature of 360 to 740 °C and in the absence of oxygen, wherein a pyrolysis gas stream and a pyrolyzed carbon black-containing particulate is obtained, gasification of the pyrolyzed carbon black-containing particulate at a temperature of 750 °C to 950 °C, obtaining treated carbon black after the gasification.

Accordingly, it is intended to use the reactor according to the present invention for the above-mentioned method. The use the reactor according to the present invention for the pyrolysis of rubber granulate and the subsequent gasification is provided.

The pyrolysis of rubber granulate can be carried out in an inert atmosphere, preferably in a nitrogen atmosphere. The pyrolysis of the rubber granulate can be carried out in an inert atmosphere, preferably in a hydrogen atmosphere. In this context, atmosphere should refer to the gaseous environment in which the material, such as the rubber granulate, is treated.

It is desired that the rubber granulate comprises carbon black.

Pyrolysis can be carried out in a reaction chamber and the oxygen content (in forms of $O_2$) in the reaction chamber should be less than 10000 ppm, preferably 1000 ppm, based on the total weight of the atmosphere in the reaction chamber. It is particularly preferred that no oxygen is present in the reaction chamber for the pyrolysis.

It is particularly preferred that no oxygen is supplied into the reaction chamber for the pyrolysis. For a multi-layered pyrolysis reactor, the reactor chamber for the pyrolysis can refer to the hearths in which the pyrolysis takes place.

During the pyrolysis a pyrolysis gas is generally obtained. The pyrolysis gas stream can be used to at least partially heat the pyrolysis (a) process and/or the gasification (b) process. For instance, the pyrolysis gas comprises hydrogen. The hydrogen or the pyrolysis gas can be used as fuel for a burner to at least partially heat the pyrolysis (a) process and/or the gasification (b) process. Accordingly, a sustainable pyrolysis process can be achieved.

The pyrolysis of rubber granulate can be carried out at a temperature of 370 °C to 700 °C, preferably 400 to 680 °C, more preferably 450 to 650 °C, and most preferably 500 to 600 °C. The temperature during the pyrolysis should be controlled so that no gasification takes place. Generally, a temperature of 750 °C or more is necessary for the gasification.

The pyrolysis of rubber granulate can be carried out at an absolute pressure of 0.5 to 2 bar, preferably 0.7 to 1.5 bar, more preferably 0.8 to 1.3 bar, and most preferably 0.9 to 1.1 bar. Accordingly, the reactor for the pyrolysis (and/or gasification) can be or comprises a pressure vessel.

It is desired that the residence time of the rubber granulate for the pyrolysis (a) is as low as possible. This means that the heat transfer should be high that can be achieved by decreasing the particle size of the rubber granulate or by decreasing the bed depth in the reactor. The bed depth refers to the height of the material to be treated in the reactor. It should be noted that in a multiple hearth furnace (MHF) the bed depth is the depth of the material that is present in a hearth and moved by the rabble arms. The rabble arms have a small gap between each rabble tines and the surface of the hearth. The material that is not moved, conveyed by the rabble arms are considered as being not treaded. Thus the depth of such material is considered as dead bed depth. The dead bed depth is usually 1 to 6 cm, such as 2 to 5 cm. The distance between the tines of the rabble arms and the hearth generally defines the dead bed depth. Accordingly, the bed depth can be alternatively expressed as the moving bed depth. In other words, the moving bed depth relates to the material transported by the rabble arms. Generally, the bed depth as used herein refers to the average bed depth.

For instance, a lower bed depth results in a better heat transfer and thus, the pyrolysis is more effective.

The bed depth of the rubber granulate can be from 0.5 to 10 cm, preferably 1 to 5 cm, more preferably 1 to 3 cm, and most preferably 1.5 to 2.5 cm. The average bed depth of the rubber granulate can be from 0.5 to 10 cm, preferably 1 to 5 cm, more preferably 1 to 3 cm, and most preferably 1.5 to 2.5 cm. The bed depth of the rubber granulate in the pyrolysis zone can be from 0.5 to 10 cm, preferably 1 to 5 cm, more preferably 1 to 3 cm, and most preferably 1.5 to 2.5 cm. The bed average depth of the rubber granulate in the pyrolysis zone can be from 0.5 to 10 cm, preferably 1 to 5 cm, more preferably 1 to 3 cm, and most preferably 1.5 to 2.5 cm. The bed depth of the rubber granulate in the gasification zone can be from 0.5 to 10 cm, preferably 2 to 8 cm, more preferably 2 to 7 cm, and most preferably 2.5 to 5 cm . The bed average depth of the rubber granulate in the gasification zone can be from 0.5 to 10 cm, preferably 2 to 8 cm, more preferably 2 to 7 cm, and most preferably 2.5 to 5 cm .

The moving bed depth of the rubber granulate can be from 0.5 to 10 cm, preferably 1 to 5 cm, more preferably 1 to 3 cm, and most preferably 1.5 to 2.5 cm. The moving average bed depth of the rubber granulate can be from 0.5 to 10 cm, preferably 1 to 5 cm, more preferably 1 to 3 cm, and most preferably 1.5 to 2.5 cm. The moving bed depth of the rubber granulate in the pyrolysis zone can be from 0.5 to 10 cm, preferably 1 to 5 cm, more preferably 1 to 3 cm, and most preferably 1.5 to 2.5 cm. The bed average depth of the rubber granulate in the pyrolysis zone can be from 0.5 to 10 cm, preferably 1 to 5 cm, more preferably 1 to 3 cm, and most preferably 1.5 to 2.5 cm. The moving bed depth of the rubber granulate in the gasification zone can be from 0.5 to 10 cm, preferably 2 to 8 cm, more preferably 2 to 7 cm, and most preferably 2.5 to 5 cm. The moving average bed depth of the rubber granulate in the gasification zone can be from 0.5 to 10 cm, preferably 2 to 8 cm, more preferably 2 to 7 cm, and most preferably 2.5 to 5 cm.

The bed depth of the rubber granulate on each hearth in a multi-layered pyrolysis reactor can be 0.5 to 10 cm, preferably 1 to 5 cm, more preferably 1 to 3 cm, and most preferably 1.5 to 2.5 cm. The average bed depth of the rubber granulate on each hearth in a multi-layered pyrolysis reactor can be 0.5 to 10 cm, preferably 1 to 5 cm, more preferably 1 to 3 cm, and most preferably 1.5 to 2.5 cm. The bed depth of the rubber granulate on each hearth in a multi-layered pyrolysis reactor in the pyrolysis zone can be 0.5 to 10 cm, preferably 1 to 5 cm, more preferably 1 to 3 cm, and most preferably 1.5 to 2.5 cm. The average bed depth of the rubber granulate on each hearth in a multi-layered pyrolysis reactor in the pyrolysis zone can be 0.5 to 10 cm, preferably 1 to 5 cm, more preferably 1 to 3 cm, and most preferably 1.5 to 2.5 cm. The bed depth of the rubber granulate on each hearth in a multi-layered pyrolysis reactor in the gasification zone can be 0.5 to 10 cm, preferably 2 to 8 cm, more preferably 2 to 7 cm, and most preferably 2.5 to 5 cm. The average bed depth of the rubber granulate on each hearth in a multi-layered pyrolysis reactor in the gasification zone can be 0.5 to 10 cm, preferably 2 to 8 cm, more preferably 2 to 7 cm, and most preferably 2.5 to 5 cm.

The moving bed depth of the rubber granulate on each hearth in a multi-layered pyrolysis reactor can be 0.5 to 10 cm, preferably 1 to 5 cm, more preferably 1 to 3 cm, and most preferably 1.5 to 2.5 cm. The moving average bed depth of the rubber granulate on each hearth in a multi-layered pyrolysis reactor can be 0.5 to 10 cm, preferably 1 to 5 cm, more preferably 1 to 3 cm, and most preferably 1.5 to 2.5 cm. The moving bed depth of the rubber granulate on each hearth in a multi-layered pyrolysis reactor in the pyrolysis zone can be 0.5 to 10 cm, preferably 1 to 5 cm, more preferably 1 to 3 cm, and most preferably 1.5 to 2.5 cm. The moving average bed depth of the rubber granulate on each hearth in a multi-layered pyrolysis reactor in the pyrolysis zone can be 0.5 to 10 cm, preferably 1 to 5 cm, more preferably 1 to 3 cm, and most preferably 1.5 to 2.5 cm. The moving bed depth of the rubber granulate on each hearth in a multi-layered pyrolysis reactor in the gasification zone can be 0.5 to 10 cm, preferably 2 to 8 cm, more preferably 2 to 7 cm, and most preferably 2.5 to 5 cm. The moving average bed depth of the rubber granulate on each hearth in a multi-layered pyrolysis reactor in the gasification zone can be 0.5 to 10 cm, preferably 2 to 8 cm, more preferably 2 to 7 cm, and most preferably 2.5 to 5 cm.

It is particularly preferred that the rabble arms (140) provided with rabble tines (141) are configured so that the desired bed depth is achieved. It is particularly preferred that the rabble arms (140) provided with rabble tines (141) are configured so that the desired moving bed depth is achieved. It is particularly preferred that the rabble arms (140) provided with rabble tines (141) are configured so that the desired moving average bed depth is achieved.

It is particularly preferred that the multiple hearths (130, 131) are configured so that the desired bed depth is achieved. It is particularly preferred that the multiple hearths (130, 131) are configured so that the desired moving bed depth is achieved. It is particularly preferred that the multiple hearths (130, 131) are configured so that the desired moving average bed depth is achieved.

The rubber granulate with respect to the bed depth usually refer to the material/feedstock that is present on each hearth during the process.

The residence time of the rubber granulate for the pyrolysis or for the gasification generally refers to the average residence time. Particularly, the residence time and the average residence time for the pyrolysis or for the gasification refers to the residence time of the rubber granulate of the material is transported or that is moving. The residence time usually does not considered material that is not moving. For instance, material that refers to the dead bed depth in a MHF.

The residence time of the rubber granulate for the pyrolysis (a) can be from 5 to 60 min, preferably 6 to 40 min, more preferably 6 to 25 min, and most preferably 7 to 15 min. The residence time of the rubber granulate for the pyrolysis (a) on each hearth of a multi-layered pyrolysis reactor can be from 1 to 20 min, preferably 2 to 15 min, more preferably 3 to 13 min, and most preferably 4 to 10 min.

The residence time of the rubber granulate for the gasification (b) can be 20 min to 4 h, preferably 1 h to 2.5 h. The residence time of the rubber granulate for the gasification (b) on each hearth of a multiple hearth furnace can be from 7 to 60 min, preferably 30 to 40 min.

The residence time of the material on each hearth of a multi-layered pyrolysis reactor can be from 10 to 60 min, preferably 10 to 40 min, more preferably 12 to 36 min, such as 10 to 15 min, 15 to 20 min, 30 to 40 min

For instance, the number of rabble arms regulates the residence time of the material on each hearth of a multiple hearth furnace.

It is preferred that the pyrolysis is carried out in rotary kiln and/or in a multi-layered pyrolysis reactor and the gasification is carried out in a fluidized bed reactor.

The rubber granulate can be heated to the required temperature for the pyrolysis (a) by using an electrical heating unit. The electrical heating unit can heat an inert gas stream, such as a nitrogen gas stream, to the required temperature and the heated inert gas stream, such as a nitrogen gas stream, is subjected to the rubber granulate for the pyrolysis (a).

The atmosphere during the pyrolysis for the rubber granulate can comprise nitrogen, preferably at least 20 vol.-% nitrogen, such as at least 25 vol.-% nitrogen, at least 30 vol.-% nitrogen, at least 40 vol.-% nitrogen, at least 50 vol.-% nitrogen, or at least 60 vol.-% nitrogen, based on the total volume of the atmosphere during the pyrolysis. During the pyrolysis of the rubber granulate, the feedstock can be subjected with nitrogen (or nitrogen gas), such as heated nitrogen (or heated nitrogen gas), wherein the nitrogen (or nitrogen gas) preferably comprises at least 30 vol.-% nitrogen, such as at least 40 vol.-% nitrogen, at least 50 vol.-% nitrogen, at least 60 vol.-% nitrogen, at least 70 vol.-% nitrogen, or at least 80 vol.-% nitrogen, based on the total volume of the nitrogen (or nitrogen gas).

The atmosphere during the pyrolysis for the rubber granulate can comprise hydrogen, preferably at least 10 vol.-% hydrogen, such as at least 20 vol.-% hydrogen, at least 25 vol.-% hydrogen, at least 30 vol.-% hydrogen, at least 40 vol.-% hydrogen, at least 50 vol.-% hydrogen, or at least 60 vol.-% hydrogen, based on the total volume of the atmosphere during the pyrolysis. During the pyrolysis of the rubber granulate, the feedstock can be subjected with hydrogen (or hydrogen gas), such as heated hydrogen (or heated hydrogen gas), wherein the hydrogen (or hydrogen gas) preferably comprises at least 30 vol.-% hydrogen, such as at least 40 vol.-% hydrogen, at least 50 vol.-% hydrogen, at least 60 vol.-% hydrogen, at least 70 vol.-% hydrogen, or at least 80 vol.-% hydrogen, based on the total volume of the hydrogen (or hydrogen gas).

Thus, the pyrolysis can be carried out by subjecting the rubber granulate with heated nitrogen to provide the desired temperature.

The atmosphere during the pyrolysis for the rubber granulate can comprise less than 20 mol.-% $H_2O$, such as less than 15 mol.-% $H_2O$, less than 10 mol.-% $H_2O$, less than 5 mol.-% $H_2O$, less than 3 mol.-% $H_2O$, less than 2 mol.-% $H_2O$, or less than 1 mol.-% $H_2O$, based on the total volume of the atmosphere during the pyrolysis. In other words, it is possible that water is present during the pyrolysis but it is intended that the water content is as low as possible. For instance, in a continuous process, water for the gasification or $CO_2$ for the gasification is removed from the atmosphere so that no water or no $CO_2$ is present during the pyrolysis. However, it is possible that residues of the water or $CO_2$ are still present.

The atmosphere during the pyrolysis for the rubber granulate can comprise less than less than 5 mol.-% $O_2$, such as less than 4 mol.-% $O_2$, less than 2 mol.-% $O_2$, less than 1 mol.-% $O_2$, less than 0.5 mol.-% $O_2$, less than 0.2 mol.-% $O_2$, or less than 0.1 mol.-% $O_2$, based on the total volume of the atmosphere during the pyrolysis.

The rubber granulate comprises (or is) plastic granulate, and/or biomass-based granulate, preferably the rubber granulate comprises carbon black.

The rubber granulate can be derived from a tire, preferably a pneumatic tire, a tire tread, a tire belt, a tire belt reinforcement, a tire carcass, a tire carcass reinforcement, a tire sidewall, tire inner liner, tire apex, tire shoulder, tire hump strip, tire chafer, a tire bead filler. The rubber granulate can be derived from a cable sheath, a tube, a drive belt, a conveyor belt, a roll covering, a shoe sole, a hose, a sealing member, a profile, a damping element, a coating or a colored or printed article.

It is possible that the rubber granulate is subjected to a size reducing step in order to obtain the desired particle size. For instance, the rubber granulate or the particulate carbon black-containing can be milled for instance using ultrasonic milling and electrical arc milling. Said milled rubber granulate or the rubber granulate can then be used as the rubber granulate for the pyrolysis (a).

The volume average particle size x50 of the rubber granulate can be from 1 to 800 $\mu$m preferably 10 to 150 $\mu$m, more preferably 30 to 100 $\mu$m, and most preferably 35 to 60 $\mu$m, wherein the volume average particle size is preferably measured as described in the specification by dry measurement using laser diffraction.

The volume average particle size x90 of the rubber granulate can be from 1 to 800 $\mu$m preferably 10 to 150 $\mu$m, more preferably 30 to 100 $\mu$m, and most preferably 35 to 60 $\mu$m, wherein the volume average particle size is preferably measured as described in the specification by dry measurement using laser diffraction.

The volume average particle size x95 of the rubber granulate can be from 300 nm to 800 $\mu$m preferably 500 nm to 150 $\mu$m, more preferably 800 nm to 100 $\mu$m, and most preferably 1 to 20 $\mu$m, wherein the volume average particle size is preferably measured as described in the specification by dry measurement using laser diffraction.

The volume average particle size x99 of the rubber granulate can be from 300 nm to 800 $\mu$m preferably 500 nm to 150 $\mu$m, more preferably 800 nm to 100 $\mu$m, and most preferably 1 to 20 $\mu$m, wherein the volume average particle size is preferably measured as described in the specification by dry measurement using laser diffraction.

The particle size of the rubber granulate can be from 1 to 800 $\mu$m preferably 10 to 150 $\mu$m, more preferably 30 to 100 $\mu$m, and most preferably 35 to 60 $\mu$m, wherein the particle size is preferably measured as described in the specification by dry measurement using laser diffraction.

The particle size of the rubber granulate can be less than 800 $\mu$m preferably less than 500 $\mu$m, more preferably less than 300 $\mu$m, and most preferably less than 200 $\mu$m, wherein the particle size is preferably measured as described in the specification by dry measurement using laser diffraction.

The expression "x50" or "x(number)" means a percentile of an average distribution (alternatively the expression "D50" or "D(number) can be used). Accordingly, x50 = 100 $\mu$m means that 50% of the sample is smaller than the indicated value 100 $\mu$m.

The particle size distribution can be determined by dry measurement with the measurement system from Sympatec GmbH (Germany) consisting of VIBRI: conveyor unit (by vibration); RODOS: compressed air dispersion; and HELOS BR: measuring unit, laser diffraction. As sample preparation, 0.5 g of the dried material is filled into the funnel. During the measurement, the sample is fed with the VIBRI unit to the compressed air dispersion unit RODOS by vibration. Measurement is accomplished in HELOS BR unit using laser diffraction. OPTICAL concentration ($c_{opt}$) was automatically filtered between 5-15% during the measurement. Three separate measurements of 10 sec using each 0.5 g of the material are recorded. Before each measurement, a background measurement of 15 sec is recorded to minimize noise. The obscuration range is controlled by the feeding rate with automatic adjustment and the hopper gap in the range of 5-15% using an integral factor of 0.2. The dispersing air pressure is set to 3 bar. Reported values (volume distribution) represent the average of three measurements after the data analysis using a standard analysis model in the instrument software.

It is desired that at least 70 wt.-%, preferably at least 80 wt.-%, more preferably at least 90 wt.-%, most preferably at least 98 wt.-%, of the rubber granulate has a particle size of more than 1 mm, wherein the particle size is measured according to ASTM D 1511-12 (2017).

It is desired that at least 70 wt.-%, preferably at least 80 wt.-%, more preferably at least 90 wt.-%, most preferably at least 98 wt.-%, of the rubber granulate has a particle size of more than 2 mm, wherein the particle size is measured according to ASTM D 1511-12 (2017).

It is desired that at least 50 wt.-%, preferably at least 60 wt.-%, more preferably at least 70 wt.-%, most preferably at least 80 wt.-%, of the rubber granulate has a particle size of more than 2.8 mm, wherein the particle size is measured according to ASTM D 1511-12 (2017) using an additional U.S. Standard Sieves or equivalent, conforming to Specification ASTM E11, Sieve Nos. 7, having openings of 2800 μm. The sieves shall be 25 mm in height and 200 mm in diameter.

It is desired that at least 50 wt.-%, preferably at least 60 wt.-%, more preferably at least 70 wt.-%, most preferably at least 80 wt.-%, of the rubber granulate has a particle size of more than 2 to 2.8 mm, wherein the particle size is measured according to ASTM D 1511-12 (2017) using an additional U.S. Standard Sieves or equivalent, conforming to Specification ASTM E11, Sieve Nos. 7, having openings of 2800 μm. The sieves shall be 25 mm in height and 200 mm in diameter.

In the ASTM D 1511-12 (2017) norm, several sieves are used for the determination of the particle sizes. For instance, the expression "more than 2 to 2.8 mm" means that the mass of the particles present on Sieve No. 10 is in the desired wt.-% range. In other words, Sieve No. 10 has openings of 2000 μm (i.e. 2 mm) so that particles having a particle size of 2000 μm or less are not present on the sieve. Since Sieve No. 7 retains all particles having a particle size of more than 2.8 mm, the weight percentage of the particle fraction having a particle size of more than 2 to 2.8 mm can be easily determined.

It is desired that at least 50 wt.-%, preferably at least 60 wt.-%, more preferably at least 70 wt.-%, most preferably at least 80 wt.-%, of the rubber granulate has a particle size of more than 1 to 2 mm, wherein the particle size is measured according to ASTM D 1511-12 (2017).

The particle size distribution of the rubber granulate can be measured according to ASTM D 1511-12 (2017) and (a) Sieve No. 10 retains 10 to 70 wt.-%, preferably 15 to 65 wt.-%, more preferably 25 to 60 wt.-%, and most preferably 30 to 55 wt.-% of the rubber granulate, and/or (b) Sieve No. 18 retains 1 to 25 wt.-%, preferably 2 to 20 wt.-%, more preferably 4 to 15 wt.-%, and most preferably 5 to 12 wt.-% of the rubber granulate, and/or (c) Sieve No. 35 retains 0 to 10 wt.-%, preferably 1 to 8 wt.-%, more preferably 2 to 7 wt.-%, and most preferably 3 to 8 wt.-% of the rubber granulate, and/or (d) Sieve No. 60 retains 0 to 10 wt.-%, preferably 1 to 8 wt.-%, more preferably 2 to 7 wt.-%, and most preferably 3 to 7 wt.-% of the rubber granulate, and/or (e) Sieve No. 120 retains 0 to 5 wt.-%, preferably 1 to 4 wt.-%, more preferably 1.5 to 3 wt.-%, and most preferably 2 to 2.5 wt.-% of the rubber granulate, and/or (f) Bottom receive pan comprises less than 4 wt.-%, preferably less than 3 wt.-%, more preferably 0 to 2 wt.-%, and most preferably 0.01 to 1 wt.-% of the rubber granulate.

The rubber granulate can comprise ash (or has an ash content), wherein ash comprise metal, metal compounds, silicon, oxygen, sulphur and/or silica, preferably metal comprises zinc, silicon, calcium, cobalt, manganese, potassium, aluminum, and/or iron.

The rubber granulate can have an ash content in a range of from 0.5 to 25 wt.-%, preferably from 1 to 20 wt.-%, more preferably from 2 to 15 wt.-%, most preferably from 3 to 10 wt.-%, wherein the wt.-% is based on the total weight of the rubber granulate and wherein the ash content is determined according to ASTM D 1506-15 at 550 °C, 16 h.

The rubber granulate can comprise zinc, preferably zinc oxide. The zinc is generally derived from a tire based feedstock used for the vulcanization of the rubber article. The rubber granulate can have a zinc content in a range of from 2.0 to 6.0 mass %, preferably from 2.5 to 5.5 mass %, more preferably from 3.0 to 5.0 mass %, most preferably from 3.5 to 4.5 mass %, wherein the zinc content is based on the total mass of rubber granulate and wherein the zinc content is preferably determined according to Inductively Coupled Plasma Optical Emission Spectrometry (ICP-OES), more preferably the zinc content is determined as described in the specification.

The analysis of the Zn content can be conducted following method A in ASTM D8371-20 using an ICP-OES (Spectro Arcos III) from SPECTRO Analytical Instruments GmbH (Germany) and a microwave (turboWAVE inert) from MLS Mikrowellen-Labor-Systeme GmbH (Germany). For the sample preparation, 0.3-0.4 g of the material was weighted into a microwave tube with a capacity of 15 cm$^3$ and wetted with 1 ml of pure water (<0.055 μS/cm). Afterward, 10 cm$^3$ of concentrated nitric acid (≥65 %) was added to the tube and treated in the microwave. The sample was then measured with ICP-OES.

The rubber granulate can have a silicon (Si) content in a range of from 1.0 to 5.0 wt.-%, preferably from 1.8 to 4.5 wt.-%, more preferably from 2.0 to 4.0 wt.-%, wherein the wt.-% is based on the total weight of the rubber granulate and wherein the silicon content is preferably determined by to Inductively Coupled Plasma Optical Emission Spectrometry (ICP-OES), more preferably the silicon content is determined as described in the specification.

The analysis of the Si content was conducted using an ICP-OES (iCAP 6300) from Thermo Fisher (USA) and a microwave (turboWAVE inert) from MLS Mikrowellen-Labor-Systeme GmbH (Germany). For the analysis of the Si content method A in ASTM D8371-20 was followed. However, a combination of concentrated nitric acid (≥65 %) and concentrated hydrofluoric acid (~ 49%) (usually in a volume ratio of 1:1) with microwave treatment was used to completely digest the sample with microwave treatment. The digested sample is diluted with distilled water to a suitable concentration. The sample was measured with ICP-OES, whereby the device is equipped with a sample introduction kit suitable for HF. In ICP-OES, silicon can be measured with two wavelengths of 288.158 nm and 251.611 nm, preferably measured at 288.158 nm. A standard, such as a commercial standard solution (1,000 g/L Si in nitric acid (1 mol/L) with 2 wt.-% HF commercially available from Bernd kraft GmbH (Germany) is measured for calibration. For the measurement of a rubber containing material, the ash obtained according to ASTM D 1506-15 at 550 °C, 16 h is used for the analysis of the Si content.

The silica (or silicon in form of silica) is typically embedded in the carbon black of the rubber granulate, attached to the carbon black of the rubber granulate, attached on the surface of the carbon black of the rubber granulate, and/or associated in the carbon black of the rubber granulate. The silica (or silicon in form of silica) is typically embedded in the carbon of the rubber granulate, attached to the carbon of the rubber granulate, attached on the surface of the carbon of the rubber granulate, and/or associated in the carbon of the rubber granulate.

The rubber granulate can have a sulfur content in a range of from 1.0 to 4.0 wt.-%, preferably from 2.0 to 4.0 wt.-%, more preferably from 2.0 to 3.0 wt.-%, wherein the wt.-% is based on the total weight of the rubber granulate and wherein the sulfur content is determined by elemental analysis as described in the specification.

The rubber granulate generally comprises carbon black. The rubber granulate (i) can comprise at least 5 wt.-% carbon black, preferably at least 15 wt.-% carbon black, more preferably at least 20 wt.-% carbon black, even more preferably at least 25 wt.-% carbon black, and most preferably at least 30 wt.-% carbon black, based on the total weight of the rubber granulate, and/or (ii) can comprise 5 to 50 wt.-% carbon black, preferably 12 to 45 wt.-% carbon black, more preferably 15 to 40 wt.-% carbon black, more preferably 20 to 35 wt.-% carbon black, and most preferably 25 to 30 wt.-% carbon black, based on the total weight of the rubber granulate.

The gasification can be carried out by using $H_2O$ and/or $CO_2$. $H_2O$ is particularly preferred. For the gasification, $H_2O$ reacts with carbon of the rubber granulate to $CO$ and $H_2$. Alternatively, $CO_2$ reacts with carbon of the rubber granulate to $CO$. It has been surprisingly found that the gasification can be used to selectively remove coke that is present in carbon black, particularly after the pyrolysis of rubber granulate.

Particularly, at low gasification temperatures, the selectivity of coke compared to carbon black is high. Accordingly, the gasification can be carried out at a temperature of 750 °C to 910 °C, preferably 770 °C to 900 °C, more preferably 780 to 890 °C, even more preferably 790 °C to 860 °C, and most preferably 800 to 850 °C.

The gasification can be carried out by subjecting the material (such as the material after the pyrolysis) with a gas comprising $H_2O$ and/or $CO_2$, preferably $H_2O$.

The gasification can be carried out by subjecting the material (such as the material after the pyrolysis) with a gas comprising 20 to 100 mol-% $H_2O$ and/or $CO_2$, preferably 30 to 100 mol-% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gas.

The gasification atmosphere in which the material (such as the material after the pyrolysis) is treated can comprise 20 to 100 mol-% $H_2O$ and/or $CO_2$, preferably 30 to 100 mol -% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gasification atmosphere in which the material (such as the material after the pyrolysis) is treated.

The gasification can be carried out by subjecting the material (such as the material after the pyrolysis) with a gas comprising up to 20 mol-% $H_2$, preferably up to 10 mol-% $H_2$, more preferably up to 5 mol-% $H_2$, most preferably up to 1 mol-% $H_2$, based on the total number of moles of the gas. Preferably no $H_2$ is present in the gas that is subjecting the material (such as the material after the pyrolysis).

The gasification atmosphere in which the material (such as the material after the pyrolysis) is treated can comprise up to 20 mol-% $H_2$, preferably up to 10 mol-% $H_2$, more preferably up to 5 mol-% $H_2$, most preferably up to 1 mol-% $H_2$, based on the total number of moles of the gasification atmosphere in which the material (such as the material after the pyrolysis) is treated.

The gasification atmosphere in which the material (such as the material after the pyrolysis) is treated can comprise 1 to 30 mol-% $H_2$, preferably 3 to 25 mol-% $H_2$, more preferably 4 to 20 mol-% $H_2$, and most preferably 6 to 15 mol-% $H_2$, based on the total number of moles of the gasification atmosphere in which the material (such as the material after the pyrolysis) is treated.

A high hydrogen containing atmosphere can be obtained by using a hydrogen burner.

It is particularly preferred that the material (such as the material after the pyrolysis) is subjected with steam for the gasification. The steam can be used to provide the required temperature for the gasification. Accordingly, a gas comprising or consisting of $H_2O$ can be preheated to a temperature of 200 °C to 950 °C, such as 730 °C to 950 °C, 730 °C to 910 °C, 730 °C to 900 °C, 740 to 890 °C, 740 °C to 860 °C, or 790 to 850 °C. Accordingly, the steam can be preheated to a temperature of 200 °C to 950 °C, such as 730 °C to 950 °C, 730 °C to 910 °C, 730 °C to 900 °C, 740 to 890 °C, 740 °C to 860 °C, or 790 to 850 °C. It is possible that the steam is preheated by a heat exchanger. The heat exchanger can exchange heat from another gas stream, such as the pyrolysis gas stream, the gasification gas stream and/or the buffer gas stream to the steam.

The material, such as the material after the pyrolysis, generally refers to the pyrolyzed carbon black-containing particulate.

The pyrolyzed carbon black-containing particulate can be heated to the required temperature for the gasification (b) by using a burner, preferably the fuel for the burner is hydrogen or natural gas, preferably hydrogen. Thus the burner for the gasification (b) can be a hydrogen burner. Hydrogen for the burner has several advantages. First, the pyrolysis gas typically comprises hydrogen so that the pyrolysis gas can be used directly as the fuel or the hydrogen can be separated from the pyrolysis gas and said hydrogen is used as fuel. In addition, a hydrogen burner can be used to generate the steam required for the gasification process.

Moreover, the required $H_2O$ for the gasification as well as the required heat can be provided by at least one hydrogen burner. The required $H_2O$ for the gasification as well as the required heat can be provided by at least one burner (173).

It is particular preferred that the material (such as the material after the pyrolysis) is heated to the required temperature for the gasification by using an oxy-fuel burner. An oxy-fuel burner generally utilizes oxygen, such as pure oxygen, (in addition to the fuel). Preferably the pure oxygen contains less nitrogen than atmospheric air. This means that the oxy-fuel burner is generally not subjected with air or a nitrogen containing gas. In other words, the oxy-fuel burner is generally subjected with non-nitrogen containing gases.

Accordingly, each burner (173) for each hearth in the gasification zone (182) can be an oxy-fuel burner.

The required $H_2O$ for the gasification as well as the required heat can be provided by at least one oxy-fuel burner.

The oxy-fuel burner can be subjected with oxygen. The oxy-fuel burner can be subjected with pure oxygen. Preferably the pure oxygen contains less nitrogen than atmospheric air. The oxy-fuel burner can be subjected with oxygen having a nitrogen content from 0 to 2 mol-% $N_2$, preferably 0 to 1 mol-% $N_2$, more preferably 0.001 to 0.5 mol-% $N_2$, and most preferably 0.01 to 0.1 mol-% $N_2$, based on the total number of moles of the oxygen supplied to the oxy-fuel burner. It is desired that no nitrogen gas is subjected to the oxy-fuel burner.

The oxy-fuel burner can be subjected with oxygen having a $O_2$ content from 80 to 100 mol-% $O_2$, preferably 90 to 100 mol-% $O_2$, more preferably 95 to 100 mol-% $O_2$, and most preferably 99 to 100 mol-% $O_2$, based on the total number of moles of the oxygen supplied to the oxy-fuel burner. It is desired that no nitrogen gas is subjected to the oxy-fuel burner. The oxygen can contain 0 to 20 mol-% steam, preferably 1 to 10 mol-% steam, more preferably 1 to 5 mol-% steam, based on the total number of moles of oxygen supplied to the oxy-fuel burner.

The oxy-fuel burner can be subjected with fuel having a nitrogen content from 0 to 2 mol-% $N_2$, preferably 0 to 1 mol-% $N_2$, more preferably 0.001 to 0.5 mol-% $N_2$, and most preferably 0.01 to 0.1 mol-% $N_2$, based on the total number of moles of the fuel supplied to the oxy-fuel burner.

The gasification atmosphere in which the material (such as the material after the pyrolysis) is treated can be substantially free of $N_2$, more preferably free of $N_2$. The gasification atmosphere in which the material (such as the material after the pyrolysis) is treated can comprise 0 to 2 mol-% $N_2$, preferably 0 to 1 mol-% $N_2$, more preferably 0.001 to 0.5 mol-% $N_2$, and most preferably 0.01 to 0.1 mol-% $N_2$, based on the total number of moles of the gasification atmosphere in which the material (such as the material after the pyrolysis) is treated.

During the gasification, the gasification zone in which the material (such as the material after the pyrolysis) is treated is preferably substantially free of $N_2$, more preferably free of $N_2$. During the gasification, the gasification zone in which the material (such as the material after the pyrolysis) is treated can comprise 0 to 2 mol-% $N_2$, preferably 0 to 1 mol-% $N_2$, more preferably 0.001 to 0.5 mol-% $N_2$, and most preferably 0.01 to 0.1 mol-% $N_2$, based on the total number of moles of the atmosphere in the gasification zone in which the material (such as the material after the pyrolysis) is treated.

The burner, such as oxy-fuel burner, can have a fuel flow rate from 1 to 2000 $Nm^3/h$, preferably 10 to 1500 $Nm^3/h$, more preferably 10 to 1000 $Nm^3/h$, and most preferably 10 to 600 $Nm^3/h$ ($Nm^3$ is a volume at defined state: Pressure: 101325 Pa and temperature: 0°C).

However, it is preferred that the oxy-fuel burner can not only utilize oxygen ($O_2$), such as pure oxygen, (in addition to the fuel) but also optionally air. This means that the oxy-fuel burner can switch between air and oxygen (such as pure oxygen) operation. Accordingly, the oxy-fuel burner generally comprises means, such an air conduit, to supply air to the oxy-fuel burner. Accordingly, the oxy-fuel burner generally comprises means, such an air conduit, to supply air to the oxy-fuel burner in addition to means, such an oxygen conduit, to supply oxygen to the oxy-fuel burner. The air operation can reduce the concentration of $H_2O$ in the gasification zone if necessary, to slow down the rate of gasification if necessary. It is preferred that the oxy-fuel burner utilizes oxygen ($O_2$), such as pure oxygen, (in addition to the fuel) and optionally utilizes air. The oxy-fuel burner can be supplied with oxygen ($O_2$) as well as air. Instead of air, the oxy-fuel burner can be supplied with $N_2$ in addition to oxygen.

It is preferred that the oxy-fuel burner can continuously increase the supply with air in addition to oxygen in order to adjust the concentration of $N_2$ and $O_2$. Accordingly, the oxy-fuel burner can comprise an oxygen conduit and an air conduit and means to mix oxygen and air that is supplied to the oxy-fuel burner. The volume ratio of oxygen to air can be 1000 to 0.001, preferably 500 to 1, more preferably 200 to 10, and most preferably 100 to 20. It is preferred that the oxy-fuel burner can continuously increase the supply with nitrogen in addition to oxygen in order to adjust the concentration of $N_2$ and $O_2$. Accordingly, the oxy-fuel burner can comprise an oxygen conduit and a nitrogen conduit and means to mix oxygen and nitrogen that is supplied to the oxy-fuel burner. The molar ratio of oxygen to nitrogen can be 1000 to 0.001, preferably 500 to 1, more preferably 200 to 10, and most preferably 100 to 20.

Accordingly, after mixing oxygen with air, the resulting mixture can have a nitrogen content from 1 to 75 mol-% $N_2$, preferably 5 to 60 mol-% $N_2$, more preferably 10 to 40 mol-% $N_2$, and most preferably 15 to 30 mol-% $N_2$, based on the total number of moles of the resulting mixture supplied to the oxy-fuel burner. Accordingly, after mixing oxygen with air, the resulting mixture can have an oxygen content from 25 to 99 mol-% $O_2$, preferably 40 to 95 mol-% $O_2$, more preferably 60 to 90 mol-% $O_2$, and most preferably 70 to 85 mol-% $O_2$, based on the total number of moles of the resulting mixture supplied to the oxy-fuel burner. The oxy-fuel burner can be supplied with a gas comprising oxygen and nitrogen, wherein the oxygen content is between 25 to 99 mol-% $O_2$, preferably 40 to 95 mol-% $O_2$, more preferably 60 to 90 mol-% $O_2$, and most

preferably 70 to 85 mol-% $O_2$, based on the total number of moles of the gas supplied to the oxy-fuel burner.

The gasification atmosphere in which the rubber granulate is treated can comprise 1 to 75 mol-% $N_2$, preferably 5 to 60 mol-% $N_2$, more preferably 10 to 40 mol-% $N_2$, and most preferably 15 to 30 mol-% $N_2$, based on the total number of moles of the gasification atmosphere in which the rubber granulate is treated.

During the gasification, the gasification zone in which the rubber granulate is treated can comprise 1 to 75 mol-% $N_2$, preferably 5 to 60 mol-% $N_2$, more preferably 10 to 40 mol-% $N_2$, and most preferably 15 to 30 mol-% $N_2$, based on the total number of moles of the atmosphere in the gasification zone in which the rubber granulate is treated.

Preferably, the fuel for the oxy-fuel burner is a hydrogen-containing fuel, preferably hydrogen or natural gas. Natural gas is preferably methane. Methane as the fuel has the advantage that the burner produces less $CO_2$ so that the ratio of $H_2O$ to $CO_2$ is higher which is beneficial for the gasification.

The fuel for the oxy-fuel burner can be methane and the oxy-fuel burner is subjected with oxygen. The fuel for the oxy-fuel burner can be hydrogen and the oxy-fuel burner is subjected with oxygen.

The multi-layered pyrolysis reactor can comprise a burner for each hearth in the buffer zone, wherein preferably each burner for each hearth in the buffer zone is an oxy-fuel burner.

It is possible that each hearth comprises at least one burner, such as at least one hydrogen burner, and/or at least one oxy-fuel burner. It is possible that each hearth in the gasification zone comprises at least one burner, such as at least one hydrogen burner, and/or at least one oxy-fuel burner. It is possible that each hearth in the buffer zone comprises at least one burner, such as at least one hydrogen burner, and/or at least one oxy-fuel burner.

It is possible that each hearth comprises at least two burners, such as at least two hydrogen burners, and/or at least two oxy-fuel burners. It is possible that each hearth in the gasification zone comprises at least two burners, such as at least two hydrogen burners, and/or at least two oxy-fuel burners. It is possible that each hearth in the buffer zone comprises at least two burners, such as at least two hydrogen burners, and/or at least two oxy-fuel burners.

The rubber granulate can be milled before the gasification step, and/or wherein the obtained treated carbon black is milled after the gasification step. For instance, using ultrasonic milling and/or electrical arc milling and/or jet milling.

The gasification can be carried out for 1 min to 10 h, preferably 10 min to 5 h, more preferably 20 min to 3 h, even more preferably 30 min to 2 h, and most preferably 40 min to 1.5 h.

The method can be carried out in a multiple hearth furnace and the pyrolysis is carried out on a hearth above a hearth for the gasification, wherein $H_2O$ (or steam) used for the gasification is removed from the multiple hearth furnace before entering a hearth for the pyrolysis.

After the gasification of the material (i.e. the pyrolyzed carbon black-containing particulate), a treated carbon black is obtained. Since the gasification selectively reduce the coke content (de-coking) in a carbon black comprising coke (e.g. recovered carbon black, or pyrolyzed carbon black), the obtained treated carbon black comprises a lower coke content compared to the pyrolyzed carbon black-containing particulate (e.g. recovered carbon black, or pyrolyzed carbon black). Thus, a treated carbon black is obtained comprising a lower coke content compared to the pyrolyzed carbon black-containing particulate. A low coke content is particularly preferred since carbon black comprising a low coke content performs better as a filler in rubber articles, such as tires. For instance, the tensile strength, the tear resistance and/or the max loss factor tan(d) is improved.

The treated carbon black can have a coke content below 15 wt.-%, preferably below 10 wt.-%, more preferably below 5 wt.-%, and most preferably below 1 wt.-%, based on the total weight of treated carbon black.

The treated carbon black comprises less impurities compared to recovered carbon black. Even if multiple measurements exists for the measurements of carbon black-containing impurities, the information on purity is different.

For instance, carbon blacks can in particular contain as impurities organic compounds that have a skeleton with a polycyclic aromatic structure, which are commonly referred to as polycyclic aromatic hydrocarbons (PAHs). PAHs are believed to be harmful to the health and environment as for example discussed in Sudip K. Samanta, Om V. Singh and Rakesh K. Jain: "Polycyclic aromatic hydrocarbons: environmental pollution and bioremediation", TRENDS in Biotechnology, Vol. 20, No. 6, Jun. 2002, pages 243-248. Therefore, the PAH content of carbon blacks is subject to increasingly demanding customer needs and official regulations for applications such as use in food or beverage contact situations, pharmaceuticals, cosmetics, or the manufacture of toys and articles for children. For instance, the American Food and Drug Administration (FDA) has limited the total PAH content of high purity furnace blacks in goods with food contact to 0.5 ppm (cf. U.S. Code of Federal Regulations (CFR) 21 Sec.178.3297), whereby the PAH content is defined as the sum of 22 PAH compounds (PAH22 content).

However, even if the PAH22 content is low, the measurement of the transmittance at 425 nm in toluene measured according to ASTM D 1618-18 against toluene can still reveal that a significant amount of impurities is still present (low transmittance). Moreover, a high transmittance at 425 nm, such as more than 90 %, does not mean that only a negligible amount of organic impurities is present on the respective carbon black. The transmittance at lower wavelengths, such as 300 nm or 355 nm, may reveal that the carbon black comprises a high amount of organic impurities. For instance, a commercial rCB A2 was measured to have a transmittance at 425 nm in toluene measured according to ASTM D 1618-18 against toluene of 99.7 % but a transmittance at 300 nm in toluene measured according to ASTM D 1618-18 against toluene of 9.5 %. In comparison, a treated carbon black according to the invention has a transmittance at 425 nm in toluene measured according to ASTM D 1618-18 against toluene of 99.9 % and a transmittance at 300 nm in toluene measured according to ASTM D 1618-18 against toluene of 94.5 %. It should be noted that in each case, the carbon black containing feedstock was heat treated and it was surprising that only after the gasification, the transmittance at 300 nm in toluene measured according to ASTM D 1618-18 against toluene was very high.

Accordingly, the treated carbon black can have a transmittance of at least 80 %, preferably at least 85 %, more preferably at least 90 %, even more preferably at least 95 %, most preferably at least 98 % wherein the transmittance at 425 nm in toluene is measured according to ASTM D 1618-18 against toluene. The treated carbon black can have a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm. The treated carbon black can have a transmittance of at least 80 %, preferably at least 85 %, more preferably at least 90 %, even more preferably at least 95 %, most preferably at least 98 % wherein the transmittance at 300 nm in toluene is measured according to ASTM D 1618-18 against toluene, wherein the transmittance is measured at 300 nm instead of 425 nm.

It is preferred that the treated carbon black has a transmittance of at least 80 %, preferably at least 85 %, more preferably at least 90 %, even more preferably at least 95 %, most preferably at least 98 % wherein the transmittance at 425 nm in toluene is measured according to ASTM D 1618-18 against toluene, and a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm, and a transmittance of at least 80 %, preferably at least 85 %, more preferably at least 90 %, even more preferably at least 95 %, most preferably at least 98 % wherein the transmittance at 300 nm in toluene is measured according to ASTM D 1618-18 against toluene, wherein the transmittance is measured at 300 nm instead of 425 nm.

The MOAH and MOSH/POSH values indicate the organic impurities of the carbon black. Again, the mere pyrolysis to obtain rCB (heat treatment) does not sufficiently reduce the organic impurities measured according to MOAH and MOSH/POSH.

The treated carbon black can have a MOAH value of below 500 mg/kg, preferably below 300 mg/kg, more preferably below 250 mg/kg, and most preferably below 200 mg/kg, determined as described in the specification.

The treated carbon black can have a MOSH/POSH value of below 900 mg/kg, preferably below 500 mg/kg, more preferably below 300 mg/kg, even more preferably below 150 mg/kg and most preferably below 100 mg/kg, determined as described in the specification.

The treated carbon black can have an iodine adsorption number of 30 to 80 mg/g, preferably 40 to 70 mg/g, more preferably 45 to 65 mg/g, the iodine adsorption number is measured according to ASTM D1510-17.

The treated carbon black can have a statistical thickness surface area (STSA) determined according to ASTM D6556-17 in a range from 15 to 500 m$^2$/g, preferably from 20 to 400 m$^2$/g, more preferably from 30 to 300 m$^2$/g, even more preferably from 40 to 200 m$^2$/g, most preferably from 50 to 150 m$^2$/g. Preferably, the statistical thickness surface area (STSA) determined according to ASTM D6556-17 of the treated carbon black is higher than the statistical thickness surface area (STSA) determined according to ASTM D6556-17 of the rubber granulate.

The treated carbon black can have a BET surface area determined according to ASTM D6556-17 in a range from 15 to 500 m$^2$/g, preferably from 30 to 300 m$^2$/g, more preferably from 40 to 250 m$^2$/g, even more preferably from 50 to 200 m$^2$/g, most preferably from 60 to 150 m$^2$/g. Preferably, BET surface area determined according to ASTM D6556-17 of the treated carbon black is higher than the BET surface area determined according to ASTM D6556-17 of the rubber granulate.

The treated carbon black can have a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

The obtained treated carbon black after the gasification can have (a) a BET surface area determined according to ASTM D6556-17 in a range from 40 to 100 m$^2$/g, preferably from 50 to 80 m$^2$/g, more preferably 55 to 70 m$^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, (b) a BET surface area determined according to ASTM D6556-17 in a range from 10 to 100 m$^2$/g, preferably from 20 to 90 m$^2$/g, more preferably 25 to 80 m$^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, and/or (c) a BET surface area determined according to ASTM D6556-17 in a range from 200 to 600 m$^2$/g, preferably from 250 to 500 m$^2$/g, more preferably 300 to 450 m$^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

The treated carbon black can have a volatile content measured at 950°C of 0.1 to 10 wt.-%, such as 0.3 to 10 wt.-

%, 0.5 to 10 wt.-%, 0.7 to 5 wt.-%, 0.8 to 4 wt.-%, 0.9 to 3 wt.-%, 1 to 2.5 wt.-%, 1.1 to 2.3 wt.-%, 1.2 to 2.2 wt.-%, 1.3 to 2.1 wt.-%, 1.4 to 2 wt.-%, 1.5 to 1.9 wt.-%, or 1.6 to 1.8 wt.-%. The volatile content can be measured as described in the specification.

The obtained treated carbon black can be milled. For instance, using mechanical (impact) milling, jet milling, ultrasonic milling and/or electrical arc milling. The desired particle sizes can be obtained after milling the obtained treated carbon black. Accordingly, the mentioned particle sizes and particle size distributions of the obtained recovered carbon black obtained after the milling.

It is preferred that the volume average particle size of the rubber granulate is higher than the volume average particle size of the obtained treated carbon black, wherein the volume average particle size is preferably measured as described in the specification by dry measurement using laser diffraction.

It is preferred that the volume average particle size of the rubber granulate is higher than the volume average particle size of the obtained treated carbon black, wherein the volume average particle size is preferably measured as described in the specification by dry measurement using laser diffraction.

The volume average particle size x50 of the obtained treated carbon black can be from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

The volume average particle size x90 of the obtained treated carbon black can be from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

The volume average particle size x95 of the obtained treated carbon black can be from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

The volume average particle size x99 of the obtained treated carbon black can be from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

The particle size of the obtained treated carbon black can be from 0.3 to 50 $\mu$m preferably 0.5 to 50 $\mu$m, more preferably 0.8 to 20 $\mu$m, and most preferably 1 to 10 $\mu$m, wherein the particle size is preferably measured as described in the specification by dry measurement using laser diffraction.

The particle size of the obtained treated carbon black can be less than 200 $\mu$m, preferably less than 150 $\mu$m, more preferably less than 100 $\mu$m, and most preferably less than 50 $\mu$m, wherein the particle size is preferably measured as described in the specification by dry measurement using laser diffraction.

The treated carbon black can comprise ash, wherein ash comprise metal, metal compounds, silicon, oxygen, sulphur and/or silica, preferably metal comprises zinc, silicon, calcium, cobalt, manganese, potassium, aluminum, and/or iron.

The treated carbon black can have an ash content in a range of from 3 to 50 wt.-%, preferably from 10 to 40 wt.-%, more preferably from 10 to 30 wt.-%, most preferably from 15 to 25 wt.-%, wherein the wt.-% is based on the total weight of the treated carbon black and wherein the ash content is determined according to ASTM D 1506-15 at 550 °C, 16 h. It is desired that the ash content determined according to ASTM D 1506-15 at 550 °C, 16 h, of the treated carbon black is higher compared to the ash content determined according to ASTM D 1506-15 at 550 °C, 16 h, of the rubber granulate. It is believed that the rubber granulate is de-coked during the gasification so that the overall carbon content is lower in the treated carbon black so that the relative ash content based on the total weight of the treated carbon black is higher.

The treated carbon black can have a cumulative pore volume for pore sizes of 0.3 to 1.5 nm of 0.015 to 0.050 $cm^3$/g, preferably 0.018 to 0.045 $cm^3$/g, more preferably 0.020 to 0.040 $cm^3$/g, even more preferably 0.021 to 0.035 $cm^3$/g, and most preferably 0.023 to 0.034 $cm^3$/g, wherein the cumulative pore volume is determined as mentioned in the specification.

The treated carbon black can have a cumulative pore volume for pore sizes of 0.3 to 0.75 nm of 0.008 to 0.035 $cm^3$/g, preferably 0.009 to 0.025 $cm^3$/g, more preferably 0.0101 to 0.020 $cm^3$/g, even more preferably 0.011 to 0.0185 $cm^3$/g, and most preferably 0.011 to 0.015 $cm^3$/g, wherein the cumulative pore volume is determined as mentioned in the specification.

The treated carbon black can have a cumulative pore volume for pore sizes of 0.3 to 0.70 nm of 0.008 to 0.035 $cm^3$/g, preferably 0.009 to 0.025 $cm^3$/g, more preferably 0.0101 to 0.020 $cm^3$/g, even more preferably 0.011 to 0.0185 $cm^3$/g, and most preferably 0.011 to 0.015 $cm^3$/g, wherein the cumulative pore volume is determined as mentioned in the specification.

The treated carbon black can be used to provide a rubber article. Examples of rubber articles include, but are not limited to, tires, conveyer belts, gaskets, such as door gaskets, drive belts, floor mats, shoe soles, belts, cable sheaths, hoses, and the like. Thus, a rubber article comprising the treated carbon black is provided. It is preferred that the rubber article is a tire.

A rubber composition is further provided for producing a tire, preferably a pneumatic tire, a tire tread, a belt, a belt reinforcement, a carcass, a carcass reinforcement, a sidewall, inner liner, apex, shoulder, hump strip, chafer, a bead filler, a cable sheath, a tube, a drive belt, a conveyor belt, a roll covering, a shoe sole, a hose, a sealing member, a profile, a damping element, a coating or a colored or printed article.

The tire may comprise a tire tread, a belt, a belt reinforcement, a carcass, a carcass reinforcement, a sidewall, inner liner, apex, shoulder, hump strip, chafer and a bead filler, wherein at least one of the foregoing is made of or comprises a rubber composition according to the invention. Such tires include for example, without being limited thereto, truck tires, passenger tires, off-road tires, aircraft tires, agricultural tires, and earth-mover tires.

Preferably, the tire has a circumferential tread of a cap/base configuration comprising a comprising a circumferential outer tread cap rubber layer which contains a running surface for the tire and a tread base rubber layer at least partially underlaying said tread cap rubber layer, wherein at least one of said tread cap rubber layer and said tread base rubber layer is made of or comprises a rubber composition according to the present invention.

The present invention further relates to an article made of or comprising the rubber composition being a cable sheath, a tube, a drive belt, a conveyor belt, a roll covering, a shoe sole, a hose, a sealing member, a profile, a damping element, a coating or a colored or printed article.

The invention further relates to a plastic composition. The plastic composition comprises at least one plastic material and at least one carbon black of the present invention.

The at least one plastic material may comprise a thermoplastic polymer, a thermosetting polymer, a thermoplastic elastomer, preferably low and high density polyethylene and polypropylene, polyvinyl chloride, melamine-formaldehyde resin, phenolic resin, epoxy resin, polyamide, polyester, polyoxymethylene, polymethyl methacrylate, polycarbonate, polystyrene, polyurethane, polyphenylene oxide, polysiloxane, polyacryloamide, polyaryletherketone, polysulfone, polyetherimide, acrylonitrile styrene acrylate or acrylonitrile butadiene styrene polymer and mixtures or co-polymers of any of the foregoing.

Furthermore, a rubber article is provided comprising carbon black comprising coke, wherein the rubber article has a topography relative peak area of less than 10 %, preferably less than 5 %, more preferably less than 2 %, and most preferably less than 1 %, wherein the topography relative peak area is measured as described in the specification. Furthermore, a rubber article is provided comprising carbon black comprising ash, wherein the rubber article has a topography relative peak area of less than 10 %, preferably less than 5 %, more preferably less than 2 %, and most preferably less than 1 %, wherein the topography relative peak area is measured as described in the specification.

The rubber article can have an abrasion of less than 110 mm$^3$, preferably less than 106 mm$^3$, more preferably 50 to 105 mm$^3$, and most preferably 90 to 105 mm$^3$, as measured at 23 °C DIN ISO 4649:2014-03, 10 N.

The carbon black can be a treated carbon black as defined in any one of the preceding aspects.

The rubber article can have a tensile strength of 21.5 to 30.0 Mpa, preferably 22.0 to 28 Mpa, as measured according to ISO 37 - 2012, S2.

The rubber article can have a topography relative peak area of less than 10 %, preferably less than 5 %, more preferably less than 2 %, and most preferably less than 1 %, wherein the topography relative peak area is measured as described in the specification.

The rubber article can have an elongation at break of more than 520 %, preferably 530 to 700 %, more preferably 550 to 700 %, even more preferably 600 to 700 %, and most preferably 615 to 700 %, as measured according to ISO 37 - 2012, S2.

The rubber article can have a Mooney viscosity of less than 65 Me, more preferably 30 to 64 Me, even more preferably 40 to 63 Me, and most preferably 50 to 61 Me, as measured according to ISO 289-1:2015.

The carbon black can comprise metal, metal compounds, silicon, oxygen, sulphur and/or silica, preferably metal comprises zinc, silicon, calcium, cobalt, manganese, potassium, aluminium, and/or iron.

The rubber article can have an abrasion of less than 120 mm$^3$, measured at 23 °C DIN ISO 4649:2014-03, 10 N.

The carbon black can have a coke content below 15 wt.-%, preferably below 10 wt.-%, more preferably below 5 wt.-%, and most preferably below 1 wt.-%, based on the total weight of treated carbon black, and/or wherein the carbon black has a coke content of 0.1 wt.-% to 15 wt.-%, preferably 0.1 wt.-% to 10 wt.-%, more preferably 0.1 wt.-% to 5 wt.-%, and most preferably 0.1 wt.-% to 1 wt.-%, based on the total weight of treated carbon black.

The carbon black can have an ash content in a range of from 3 to 50 wt.-%, preferably from 10 to 40 wt.-%, more preferably from 10 to 30 wt.-%, most preferably from 15 to 25 wt.-%, wherein the wt.-% is based on the total weight of the treated carbon black and wherein the ash content is determined according to ASTM D 1506-15 at 550 °C, 16 h.

The rubber article can have (A) a peak count of 5 to 10 $\mu$m is less than 300, preferably less than 200, more preferably less than 100, and most preferably less than 50, wherein the topography relative peak area is measured as described in the specification, and/or (B) a peak count of 5 to 10 $\mu$m is less than 6, preferably less than 5, more preferably less than 4, and most preferably less than 3, wherein the topography relative peak area is measured as described in the specification, and/or (C) a peak count of 10 to 15 $\mu$m is less than 1.5, and most preferably less than 1, wherein the topography relative peak area is measured as described in the specification.

The invention will now be described with reference to the accompanying figures (FIGs) which do not limit the scope and ambit of the invention. The description provided is purely by way of example and illustration. However, specific features exemplified in the figures can be used to further restrict the scope of the invention and claims.

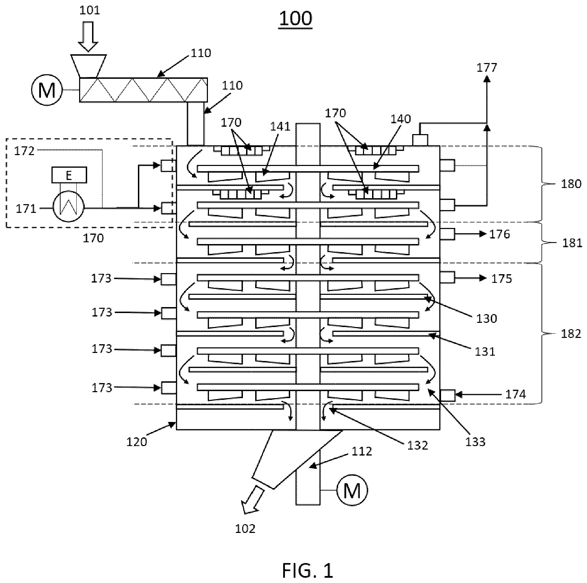

In FIG. 1, a multiple hearth furnace (100) (i.e. multi-layered pyrolysis reactor), particularly a multiple hearth furnace, for the heat treatment of a rubber granulate is shown. The multiple hearth furnace (100) (hereinafter referred to as reactor) comprises three zones, namely a pyrolysis zone (180), a buffer zone (181) and a gasification zone (182). The reactor can be a vessel defining a reactor chamber. The vessel can be a pressure vessel.

The multi-layered pyrolysis reactor comprises an upper inlet (110) for the rubber granulate (101) to be treated. In FIG. 1 a screw conveyer (111) is shown that transfers rubber granulate (101) to the upper inlet (110) and onto the upper hearth of the reactor (100). The screw conveyer (111) is driven by a motor.

The reactor further comprises a rotating central shaft (112), an outer casting (120) to which a plurality of hearths (130, 631) are fastened. In FIG. 1, seven hearths (130, 131) are shown. The number of hearths (130, 131) are not particularly limited. However, the reactor (100) should comprise at least two hearths so that the pyrolysis can take place at the upper hearth and the gasification can take place at the lower hearth. The reactor is configured so that multiple superimposed annular hearths (130, 131) are present.

The reactor further comprises multiple rabble arms (140) provided with rabble tines (141) above each hearth (130, 131) and rotated by the rotating central shaft (112), said hearths (130, 131) alternately and respectively having an opening (132) proximal to the rotating central shaft (112) and an opening (133) distal to the rotating central shaft (112) so as to give the material to be treated a spiral path along the height of the furnace. In other words, the multiple rabble arms (140) and hearths (130, 131) are configured to transfer the material radially along each hearth in an alternating inward and outward direction to affect a downward cascading of the material from one hearth to the next hearth therebelow.

Furthermore, the reactor (100) comprises an electrical heating unit (170). The electrical heating unit (170) is configured to heat the material to 360 to 740 °C in the pyrolysis zone (180). In the figure, the electrical heating unit (170) comprises an electrical heating unit (170) that is inside the reaction chamber and an electrical heating unit (170) that is positioned outside the reactor.

The electrical heating unit (170) that is inside the reaction chamber can be an electrical heating element that is positioned above the rabble arms in the pyrolysis zone (180). In other words, it is intended that the electrical heating unit (170) is positioned above each rabble arms on each hearth. Said electrical heating unit (170) can provide the necessary temperature for the pyrolysis.

In addition, or alternatively, an electrical heating unit (170) is provided outside the reactor. A first inert gas stream (171), such as nitrogen, is subjected to an electrical heater to obtain a heated inert gas stream, such as a heated nitrogen stream. A second inert gas stream (172), such as nitrogen, is connected to the heated nitrogen stream. The second inert gas stream (172) can be used to precisely control the temperature of the inert gas stream subjected into the reactor (100), i.e. reaction chamber. In a preferred embodiment, the electrical heating unit (170) comprises an electrical heating unit (170) that is inside the reaction chamber and an electrical heating unit (170) that is positioned outside the reactor.

The numbering of the hearths starts with the uppermost hearth. The third hearth in FIG. 1 is an optional buffer hearth that should not be separately heated.

The reactor (100) further comprises a burner (173) for each hearth in the gasification zone (182). For example, a burner (173) is present on each of the four lowermost hearths. Each burner (173) is supplied with fuel and oxygen. It is specifically preferred that hydrogen is the fuel (i.e. oxyhydrogen). However, a natural gas, such as methane, ethane or propane, can be used as fuel as well. It is possible that multiple burners (173) for each hearth in the gasification zone (182) are disposed circumferentially around the interior of said reaction chamber.

The number rabble arms (640) comprising rabble tines (641) is not specifically limited but the number of rabble arms (640) regulates the residence time of the material on each hearth. It is preferred that the number of rabble arms (640) provided with rabble tines (141) above each hearth (630, 631) is from 1 to 5, preferably 1 to 4, such as 1, 2, 3 or 4. It should be noted that the number of rabble arms (640) specifically relate to the rabble arms (640) comprising rabble tines (141). It is possible that the reactor comprises further rabble arms (640) without rabble tines. Often, a fixed number of rabble arms are present on each hearth and if a specific number of number of rabble arms (640) provided with rabble tines (141) is desired, the rabble tines are mounted to the desired number rabble arms.

The residence time of the material on each hearth can be from 1 to 60 min, preferably 2 to 45 min, more preferably 3 to 37 min, and most preferably 4 to 20 min. For instance, the residence time of the material in the pyrolysis zone on each hearth is 1 to 20 min, preferably 2 to 15 min, more preferably 3 to 13 min, and most preferably 4 to 10 min. For instance, the residence time of the material in the gasification zone on each hearth is 30 to 40 min. The total residence time on all hearths in the pyrolysis zone can be 5 to 60 min, preferably 6 to 40 min, more preferably 6 to 25 min, and most preferably 7 to 15 min. The total residence time on all hearths in the gasification zone can be 0.5 h to 4 h, preferably 0.45 h to 1.5 h.

The temperature of each hearth in the pyrolysis zone should be from 360 to 740 °C, preferably 400 to 720 °C, more preferably 500 to 700 °C, most preferably 600 to 700 °C. The temperature of each hearth in the gasification zone should be from 750 to 950 °C, preferably 750 to 900 °C, more preferably 750 to 850 °C, most preferably 750 to 800 °C.

The reactor further comprises a steam inlet (174) provided at the lowermost hearth in the gasification zone (182).

It is desired that 1 to 200 kg/h steam, 5 to 150 kg/h steam, 10 to 100 kg/h steam, 20 to 60 kg/h steam, 30 to 45 kg/h steam, is subjected at the lowermost hearth. The reactor further comprises a gasification gases outlet (175) at the uppermost hearth of the gasification zone (182). The reactor further comprises a buffer gases outlet (176) at the hearth of the buffer zone (181). The reactor further comprises a pyrolysis gases outlet (177) at the uppermost hearth of the pyrolysis zone (180).

The treated carbon black (102) is collected at the bottom of the reactor (100).

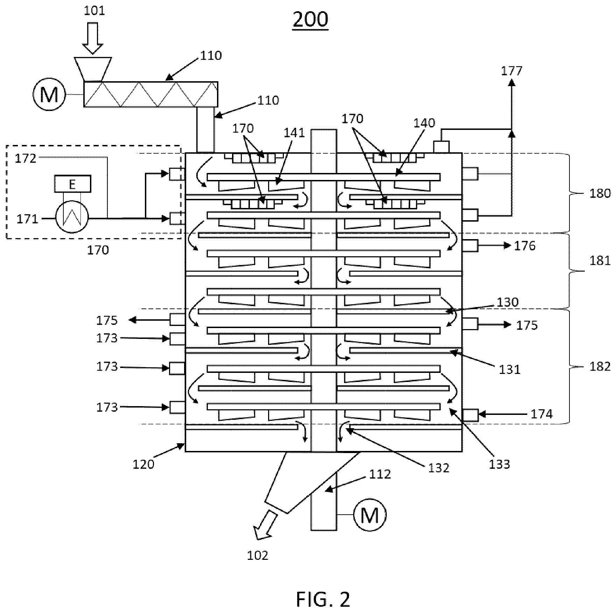

In FIG. 2, a further MHF reactor is shown. The reactor has two pyrolysis hearths in the pyrolysis zone (180), two buffer hearths in the buffer zone (181), and three gasification hearths in the gasification zone (182). Steam outlets (175) are shown that are positioned below a hearth that has the opening (133) distal to the rotating central shaft (112). Accordingly, it is possible improve the efficiency of the removal of steam before entering the buffer zone (181) and/or the pyrolysis zone (180).

In addition, the present invention will be described by means of the following aspects.

1. A multi-layered pyrolysis reactor (100) for the heat treatment of rubber granulate (101), having a pyrolysis zone (180) and a gasification zone (182), wherein the reactor (100) comprises:

   (A) multiple hearths (130, 131),
   (B) a rotating central shaft (112),
   (C) rabble arms (140) provided with rabble tines (141) above each hearth (130, 131) and rotated by the rotating central shaft (112), the at least one rabble arm (140) and multiple hearths (130, 131) are configured to transfer the material radially along each hearth in an alternating inward and outward direction to affect a downward cascading of the material from one hearth to the next hearth therebelow,
   (D) an upper inlet (110) for the rubber granulate (101) configured to provide rubber granulate on the uppermost hearth,
   (E) a heating unit (170), wherein the heating unit (170) is configured to heat the material to 360 to 740 °C in the pyrolysis zone (180), wherein the heating unit (170) is selected from an electrical heating unit (170) and/or a microwave heating unit,
   (F) a burner (173) for each hearth in the gasification zone (182), configured to heat the material to 750 to 950 °C.

2. The multi-layered pyrolysis reactor (100) according to aspect 1, wherein the reactor comprises a steam inlet (174) provided at the lowermost hearth in the gasification zone (182).

3. The multi-layered pyrolysis reactor (100) according to anyone of aspects 1 or 2, wherein the multi-layered pyrolysis reactor (100) is a multiple hearth furnace (100).

4. The multi-layered pyrolysis reactor (100) according to anyone of the preceding aspects, wherein the reactor comprises 2 to 20 hearths, preferably 4 to 15 hearths, more preferably 6 to 12 hearths, even more preferably 6 to 10 hearths, and most preferably 7 to 8 hearths.

5. The multi-layered pyrolysis reactor (100) according to anyone of the preceding aspects, wherein pyrolysis zone is the zone in which the heating unit (170) heats the material on each hearth to 360 to 740 °C, and/or gasification zone is the zone in which the burner(s) heat(s) the material on each hearth to 750 to 950 °C.

6. The multi-layered pyrolysis reactor (100) according to anyone of the preceding aspects, wherein the heating unit (170) is an electrical heating unit (170), preferably wherein pyrolysis zone is the zone in which the electrical heating unit (170) heats the material on each hearth to 360 to 740 °C, and/or gasification zone is the zone in which the burner(s) heat(s) the material on each hearth to 750 to 950 °C.

7. The multi-layered pyrolysis reactor (100) according to anyone of the preceding aspects, wherein the two uppermost hearths defining the pyrolysis zone, preferably in which the electrical heating unit heats the material on each hearth to 360 to 740 °C.

8. The multi-layered pyrolysis reactor (100) according to anyone of the preceding aspects, wherein the electrical heating unit is configured to provide heated inert gas, such as heated nitrogen, to each hearth in the pyrolysis zone to heat the material to 360 to 740 °C.

9. The multi-layered pyrolysis reactor (100) according to anyone of the preceding aspects, wherein the four lowermost hearths defining the gasification zone, preferably in which the burner (173) for each hearth heats the material on each hearth to 750 to 950 °C.

10. The multi-layered pyrolysis reactor (100) according to anyone of the preceding aspects, wherein a buffer hearth is present defining a buffer zone between the pyrolysis zone and the gasification zone, wherein multi-layered pyrolysis reactor (100) comprises a burner for each hearth in the buffer zone, wherein preferably each burner for each hearth in the buffer zone is an oxy-fuel burner.

11. The multi-layered pyrolysis reactor (100) according to anyone of the preceding aspects, wherein the heating unit (170) is a microwave heating unit, wherein a microwave heating unit is present for each hearth in the pyrolysis zone (180), configured to heat the material to 360 to 740 °C.

12. The multi-layered pyrolysis reactor (100) according to anyone of the preceding aspects, wherein the reactor comprises a steam outlet (175) on the uppermost hearth of the buffer zone (181) and/or on the uppermost hearth of the gasification zone (182).

13. The multi-layered pyrolysis reactor (100) according to anyone of the preceding aspects, wherein the reactor comprises a steam outlet (175) that is configured to remove steam before the steam reaches the pyrolysis zone (180).

14. The multi-layered pyrolysis reactor (100) according to anyone of the preceding aspects, wherein each burner (173) for each hearth in the gasification zone (182) is a hydrogen burner.

15. The multi-layered pyrolysis reactor (100) according to anyone of the preceding aspects, wherein each burner (173) for each hearth in the gasification zone (182) is a hydrogen-oxygen burner.

16. The multi-layered pyrolysis reactor (100) according to anyone of the preceding aspects, wherein the hearths (130, 131) alternately and respectively having an opening (132) proximal to the rotating central shaft (112) and an opening (133) distal to the rotating central shaft (112) so as to give the material to be treated a spiral path along the height of the furnace.

17. The multi-layered pyrolysis reactor (100) according to anyone of the preceding aspects, a buffer gases outlet (176) provided in the buffer zone (181), preferably the buffer gases outlet (176) removes the gases in the buffer zone before the gases reaches the pyrolysis zone (180).

18. The multi-layered pyrolysis reactor (100) according to anyone of the preceding aspects, a pyrolysis gases outlet (177) provided in the buffer zone (180), preferably the pyrolysis gases outlet (177) removes the gases in the pyrolysis zone (180).

19. The multi-layered pyrolysis reactor (100) according to anyone of the preceding aspects, wherein the number of rabble arms (140) above each hearth (130, 131)

  (i) is from 1 to 5, preferably 1 to 4, such as 1, 2, 3 or 4, and/or
  (ii) in the pyrolysis zone is 1 to 5, preferably 1 to 3, most preferably 2 to 3, and/or
  (ii) in the buffer zone is 1 to 5, preferably 1 to 3, most preferably 2 to 3, and/or
  (ii) in the gasification zone is 1 to 5, preferably 1 to 2, most preferably 1.

20. The reactor according to any one of the preceding claims, wherein the reactor comprises means to use the gasification gases to heat the material to 750 to 950 °C.

21. A method for the heat treatment of rubber granulate using a reactor according to any one of aspects 1 to 20, comprising pyrolysis of rubber granulate at a temperature of 360 to 740 °C and in the absence of oxygen, wherein a pyrolysis gas stream and a pyrolyzed carbon black-containing particulate is obtained, gasification of the pyrolyzed carbon black-containing particulate at a temperature of 750 °C to 950 °C, obtaining treated carbon black after the gasification.

22. The method according to aspect 21, wherein bed depth of the rubber granulate on each hearth is 0.5 to 10 cm, preferably 0.5 to 5 cm, more preferably 0.5 to 3 cm, and most preferably 0.5 to 2 cm.

23. Use of the reactor according to any one of aspects 1 to 20 for the pyrolysis of rubber granulate and the subsequent gasification.

24. Treated carbon black, wherein the treated carbon black has a cumulative pore volume for pore sizes of 0.3 to 1.5 nm of 0.015 to 0.050 $cm^3/g$, preferably 0.018 to 0.045 $cm^3/g$, more preferably 0.020 to 0.040 $cm^3/g$, even more preferably 0.021 to 0.035 $cm^3/g$, and most preferably 0.023 to 0.034 $cm^3/g$, wherein the cumulative pore volume is determined as mentioned in the specification.

25. Treated carbon black, wherein the treated carbon black has a cumulative pore volume for pore sizes of 0.3 to 0.75 nm of 0.008 to 0.035 $cm^3/g$, preferably 0.009 to 0.025 $cm^3/g$, more preferably 0.0101 to 0.020 $cm^3/g$, even more preferably 0.011 to 0.0185 $cm^3/g$, and most preferably 0.011 to 0.015 $cm^3/g$, wherein the cumulative pore volume is determined as mentioned in the specification.

26. The treated carbon black defined according to anyone of the previous aspects 54 to 58, wherein the treated carbon black has an ash content in a range of from 3 to 50 wt.-%, preferably from 10 to 40 wt.-%, more preferably from 10 to 30 wt.-%, most preferably from 15 to 25 wt.-%, wherein the wt.-% is based on the total weight of the obtained treated carbon black after the gasification and wherein the ash content is determined according to ASTM D 1506-15 at 550 °C, 16 h.

27. The treated carbon black defined according to anyone of the previous aspects 24 to 26, wherein the treated carbon black is derived from a pyrolyzed particulate carbon-containing feedstock.

28. The multi-layered pyrolysis reactor (100) according to anyone of the preceding aspects, wherein each burner (173) for each hearth in the gasification zone (182) is an oxy-fuel burner.

29. A rubber article comprising carbon black comprising coke, wherein the rubber article has a topography relative peak area of less than 10 %, preferably less than 5 %, more preferably less than 2 %, and most preferably less than 1 %, wherein the topography relative peak area is measured as described in the specification.

29A. A rubber article comprising carbon black comprising ash, wherein the rubber article has a topography relative peak area of less than 10 %, preferably less than 5 %, more preferably less than 2 %, and most preferably less than 1 %, wherein the topography relative peak area is measured as described in the specification.

30. The rubber article according to aspect 29, the carbon black is a treated carbon black produced according to any one of the preceding aspects.

31. The rubber article according to any one of aspects 29 or 30, wherein the rubber article has an abrasion of less than 110 mm$^3$, preferably less than 106 mm$^3$, more preferably 50 to 105 mm$^3$, and most preferably 90 to 105 mm$^3$, as measured at 23 °C DIN ISO 4649:2014-03, 10 N.

32. The rubber article according to any one of aspects 29 or 31, wherein the carbon black is a treated carbon black as defined in any one of the preceding aspects.

33. The rubber article according to any one of aspects 29 to 32, wherein the rubber article has a tensile strength of 21.5 to 30.0 Mpa, preferably 22.0 to 28 Mpa, as measured according to ISO 37 - 2012, S2.

34. The rubber article according to any one of aspects 29 to 33, wherein the rubber article has a topography relative peak area of less than 10 %, preferably less than 5 %, more preferably less than 2 %, and most preferably less than 1 %, wherein the topography relative peak area is measured as described in the specification.

35. The rubber article according to any one of aspects 29 to 34, wherein the rubber article has an elongation at break of more than 520 %, preferably 530 to 700 %, more preferably 550 to 700 %, even more preferably 600 to 700 %, and most preferably 615 to 700 %, as measured according to ISO 37 - 2012, S2.

36. The rubber article according to any one of aspects 29 to 35, wherein the rubber article has a Mooney viscosity of less than 65 Me, more preferably 30 to 64 Me, even more preferably 40 to 63 Me, and most preferably 50 to 61 Me, as measured according to ISO 289-1:2015.

37. The rubber article according to any one of aspects 29 to 36, wherein the carbon black comprises metal, metal compounds, silicon, oxygen, sulphur and/or silica, preferably metal comprises zinc, silicon, calcium, cobalt, manganese, potassium, aluminium, and/or iron.

38. The rubber article according to any one of aspects 29 to 37, wherein the rubber article has an abrasion of less than 120 mm$^3$, measured at 23 °C DIN ISO 4649:2014-03, 10 N.

39. The rubber article according to any one of aspects 29 to 38, wherein the carbon black has a coke content below 15 wt.-%, preferably below 10 wt.-%, more preferably below 5 wt.-%, and most preferably below 1 wt.-%, based on the total weight of treated carbon black, and/or wherein the carbon black has a coke content of 0.1 wt.-% to 15 wt.-%, preferably 0.1 wt.-% to 10 wt.-%, more preferably 0.1 wt.-% to 5 wt.-%, and most preferably 0.1 wt.-% to 1 wt.-%, based on the total weight of treated carbon black.

40. The rubber article according to any one of aspects 29 to 39, the carbon black has an ash content in a range of from 3 to 50 wt.-%, preferably from 10 to 40 wt.-%, more preferably from 10 to 30 wt.-%, most preferably from 15 to 25 wt.-%, wherein the wt.-% is based on the total weight of the treated carbon black and wherein the ash content is determined according to ASTM D 1506-15 at 550 °C, 16 h.

41. The rubber article according to any one of aspects 29 to 40, wherein (A) the peak count of 5 to 10 $\mu$m is less than 300, preferably less than 200, more preferably less than 100, and most preferably less than 50, wherein the topography relative peak area is measured as described in the specification, and/or (B) the peak count of 5 to 10 $\mu$m is less than 6, preferably less than 5, more preferably less than 4, and most preferably less than 3, wherein the topography relative peak area is measured as described in the specification, and/or (C) the peak count of 10 to 15 $\mu$m is less than 1.5, and most preferably less than 1, wherein the topography relative peak area is measured as described in the specification.

## EXAMPLES

Rubber granulate 1, i.e. Gummigranulat 1,6 - 3,2 mm, used in the experiments was obtained from ESTATO Umweltservice GmbH (ESTATO), Germany. The rubber granulate was derived from waste tires and comprises synthetic rubber (SBR) and natural rubber (NR). However, it is also possible to use different rubber granulate such as plastic granulates or biomass-based granulates. The rubber granulate 1 comprises carbon black.

Continuous process for pyrolysis and gasification

The rubber granulate 1 was transported on a conveyor belt and then fed into a 36 inch multiple hearth furnace having six hearths (floors) from above via a double flap. On each of the six hearths, both the temperature and the residence time of the rubber granulate 1 on the respective floor could be set. The temperature could be regulated using natural gas burners. Each floor was equipped with its own burner. The dwell time could be set via the modification of the number of baffles on the rotating arms and the shaft rotation speed. Said configuration was adapted according to Table 1. This results in different residence times of the used granulate on the different levels. The fewer arms there are, the longer the retention time. In addition to the different temperatures and residence times, the different levels can be operated with varying gas atmospheres. While only the gases required to operate the burners are used on the first two levels, additional steam is introduced on the lowest level. While a temperature of 700 °C is set on the first two shelves, a temperature of 800 °C or 850 °C were selected on the lower four hearths. In this case, the multiple hearth furnace can be divided into two reaction zones. While the pyrolysis reaction takes place on the first two hearths, the test parameters on the lower four hearths are selected so that decoking can take place.

In Example 4A, the rubber granulate 1 was subjected to a pyrolysis reaction without a subsequent gasification. Accordingly, hearths 3 to 6 were not heated and no steam was subjected into the reactor. For this example, a fuel burner was used for the pyrolysis. However, an electrical heating unit or a microwave heating unit can be used instead of a fuel burner. It is believed that an electrical heating unit and/or a microwave heating unit for the pyrolysis and a fuel burner the subsequent gasification result in a similar treated product. The utilization of an electrical heating unit and/or a microwave heating unit for the pyrolysis has further advantages for the process. No reaction water or $CO_2/CO$ derived from the combustion of fuel are present. Accordingly, it is possible to only utilize heated $N_2$ for the heating of the material to be treated.

Table 1: Process conditions used for the MHF process.

| Hearth | Number of used rabble arms | Residence time / min | Temp. / °C | Subjected steam / kg h$^{-1}$ | Bed depth (moving bed depth) / cm | Dead bed depth / cm |
|---|---|---|---|---|---|---|
| Example 1A | | | | | | |
| 1 | 3 | 12 | 700 | | 1.87 | 4.3 |
| 2 | 2 | 18 | 700 | | 1.83 | 4.3 |
| 3 | 1 | 36 | 800 | | 3.65 | 4.3 |
| 4 | 1 | 36 | 800 | | 3.65 | 4.3 |
| 5 | 1 | 36 | 800 | | 3.65 | 4.3 |
| 6 | 1 | 36 | 800 | 40 | 3.65 | 4.3 |
| Example 2A | | | | | | |
| 1 | 3 | 12 | 700 | | 1.87 | 4.3 |
| 2 | 2 | 18 | 700 | | 1.83 | 4.3 |
| 3 | 1 | 36 | 850 | | 3.65 | 4.3 |
| 4 | 1 | 36 | 850 | | 3.65 | 4.3 |
| 5 | 1 | 36 | 850 | | 3.65 | 4.3 |
| 6 | 1 | 36 | 850 | 10 | 3.65 | 4.3 |
| Example 3A | | | | | | |
| 1 | 3 | 12 | 700 | | 1.87 | 4.3 |
| 2 | 2 | 18 | 700 | | 1.83 | 4.3 |
| 3 | 1 | 36 | 800 | | 3.65 | 4.3 |
| 4 | 1 | 36 | 800 | | 3.65 | 4.3 |
| 5 | 1 | 36 | 800 | | 3.65 | 4.3 |
| 6 | 1 | 36 | 800 | 10 | 3.65 | 4.3 |
| Example 4A Pyrolysis | | | | | | |
| 1 | 3 | 12 | 700 | | 1.87 | 4.3 |
| 2 | 2 | 18 | 700 | | 1.83 | 4.3 |
| 3 | 1 | 36 | Not heated | | 3.65 | 4.3 |
| 4 | 1 | 36 | Not heated | | 3.65 | 4.3 |
| 5 | 1 | 36 | Not heated | | 3.65 | 4.3 |

(continued)

| Example 4A Pyrolysis | | | | | | |
|---|---|---|---|---|---|---|
| 6 | 1 | 36 | Not heated | 0 | 3.65 | 4.3 |

In table 2, the process conditions are summarized. The air flow (Air) as well as the natural gas flow (NG) is indicated for the burner of hearths 3 to 6. The feed rate for Example 4A was 22.6 kg/h.

Table 2: Process conditions used for the MHF process.

| Example | 1A | 2A | 3A |
|---|---|---|---|
| Air / Nm$^3$/h | 90 | 102 | 59 |
| NG / Nm$^3$/h | 10 | 11.48 | 6.2 |
| Steam flow / kg h$^{-1}$ | 40 | 10 | 10 |
| Production Rate kg/h | 7.56 | 7.15 | 8.78 |
| Feeding rate kg/ h | 23.76 | 24.5 | 23.76 |
| Pyrolysis Yield / wt.-% | 43 | 43 | 43 |
| De-coking Yield / wt.-% | 73 | 69 | 85 |
| Total solid Yield / wt.-% | 31 | 30 | 37 |
| Calc. removed carbon / wt.-% | 27 | 31 | 15 |

The pyrolysis yield is the yield after the pyrolysis in the first two hearths. For the determination of the pyrolysis yield, the gasification process was omitted and the yield after the pyrolysis was noted. The de-coking yield is the yield after the gasification based on the feedstock subjected to the gasification. Accordingly, Example 1A has a yield of 73 wt.-% based on the feedstock subjected to the gasification so that 27 wt.-% of carbon was converted to gas. It is believed that the coke present in the feedstock has a higher reactivity compared to carbon black. If the temperature during the gasification is below 950 °C, the coke is selectivity converted instead of the carbon black. At higher temperatures, the selectivity decreases. Accordingly, in Example 1A, it is believed that the calc. removed carbon of 27 wt.-% is coke.

The properties of two commercial recovered carbon blacks (A1 (producer 1) and A2 (producer 2); both obtained after the pyrolysis of waste tire rubber granulate) and the obtained treated carbon blacks are shown in table 3.

Table 3: Properties of the treated carbon black.

| | Commercial rCB A1 | Commercial rCB A2 | Example 1A | Example 2A | Example 3A | Example 4A |
|---|---|---|---|---|---|---|
| **Toluene transmittance[1] at 300 nm[1] / %** | 0.0 | 9.5 | 94.5 | 94.25 | 88.84 | 0.03 |
| **Toluene transmittance[1] at 355 nm[1] / %** | 18.4 | 89.5 | 99.2 | 99.50 | 97.97 | 0.75 |
| **Toluene transmittance[2] at 425 nm[2] / %** | 79.2 | 99.7 | 99.9 | 99.76 | 100 | 28.82 |
| Ash content[3] / wt.-% | 23.9 | 22.8 | 31.9 | 30.7 | 30.1 | 27.7 |
| STSA[4] / m$^2$ g$^{-1}$ | 60.9 | 58.1 | 63.4 | 64.3 | 56.1 | 47 |
| BET[5] / m$^2$ g$^{-1}$ | 72.4 | 71.3 | 79.8 | 82.5 | 66.4 | 53.3 |
| C / wt.%[6] | n.D. | n.D. | 66.36 | 70.27 | 67.4 | 67.81 |
| H / wt.%[6] | n.D. | n.D. | 0.2 | 0.33 | 0.21 | 1.16 |
| N / wt.%[6] | n.D. | n.D. | 0.1 | 0.09 | 0.1 | 0.15 |
| S / wt.%[6] | n.D. | n.D. | 1.76 | 1.97 | 1.94 | 1.7 |
| O / wt.%[6] | n.D. | n.D. | 1.31 | 1.34 | 1.18 | 3.09 |

(continued)

|  | Commercial rCB A1 | Commercial rCB A2 | Example 1A | Example 2A | Example 3A | Example 4A |
|---|---|---|---|---|---|---|
| H:C / atomic ratio | n.D. | n.D. | 0.036 | 0.056 | 0.037 | 0.203 |
| O:C / atomic ratio | n.D. | n.D. | 0.015 | 0.014 | 0.013 | 0.034 |
| Cumulative Pore Volume[7] for pore sizes of 0.3 to 0.70 nm / $cm^3$/g | n.D. | 0.00646 | 0.0104 | 0.0181 | 0.014 | 0.00884 |
| Cumulative Pore Volume[7] for pore sizes of 0.3 to 0.75 nm / $cm^3$/g | n.D. | 0.00703 | 0.0113 | 0.0187 | 0.0112 | 0.00973 |
| Cumulative Pore Volume[7] for pore sizes of 0.3 to 1.5 nm / $cm^3$/g | n.D. | 0.0138 | 0.0230 | 0.0329 | 0.0215 | 0.0203 |

[1]Transmittance (Transmittance of Toluene Extract) was measured in accordance with ASTM D 1618-18 against toluene expect that the wavelength for the measurement was 300 nm or 355 nm instead of 425 nm.
[2]Transmittance at 425 nm in toluene (Transmittance of Toluene Extract) was measured according to ASTM D 1618-18 against toluene.
[3]The ash content was measured according to ASTM D 1506-15 at 550 °C, 16 h.
[4]STSA surface area was measured according to ASTM D6556-21.
[5]BET surface area was measured according to ASTM D6556-21.
[6]The mass factions are determined as mentioned below (CHNS content determination and O content determination).
[7]Cumulative Pore Volume having a pore size of 0.3 to 1.5 nm and 0.3 to 0.75 nm are determined as mentioned below.

It can be observed that the ash content for the treated carbon black in the MHF is higher than for the two commercial rCBs. This is due to the fact that additional steam and a treatment at higher temperatures was used in the MHF in order to de-coke the material. This causes some of the carbon to react with the steam to form carbon monoxide. Consequently, a reduced carbon content results in a higher ash content.

Moreover, the treated carbon black obtained from the tests in the MHF has higher transmission values than two commercial rCBs. It can therefore be concluded that the rCB produced in the reactor is loaded with fewer organic, toluene extractable contaminants (such as aliphatics and small aromatics) than the two commercial rCBs.

Example 4A reveals that the H:C atomic ratio is significantly higher than the H:C atomic ratio of Examples 1A, 2A and 3A. This is an indication that contaminants are present on the carbon black obtained in Example 4A which are removed following de-coking.

Moreover, a high cumulative pore volume (microporosity) for carbon black that is recycled from a rubber granulate is desired. The commercial recovered carbon blacks generally have a low cumulative pore volume. These pores are important for the applicability of the carbonaceous filler in a rubber matrix, as the high surface area and magnitude of Van Der Waal interactive forces in these small pores commonly act as sites for chemical bonding. In carbon black, these pores can exist either within or between primary particles. In recovered carbon black, coke deposition during the pyrolysis process would likely occur in these microporous regions, reducing the overall microporous surface area and microporous volume. This is anticipated to have a negative impact on in-application tests.

The higher amount of cumulative pore volume of the treated carbon black of examples 1A to 4A suggests that the MHF is more thermally efficient and there is less residence time required for complete primary pyrolysis. This results in less coking, so less blocking of micropores compared to commercial alternatives.

Furthermore, the gasification additionally improves the microporosity of the obtained treated carbon black as can be seen from examples 1A to 3A compared to 4A. Thus, the gasification of the coke causes a more microporous surface, which is anticipated to improve in rubber application processes.

Measurement of the Cumulative Pore Volume

Adsorption and desorption isotherms for $CO_2$ at 273 K were collected between the pressure range (P/P0) of 0.05 and 1 on a Quantachrome Autosorb iQ3 Gas Sorption Analyser (Software: Model 7 ASiQWin Version: 5.21). Briefly, 0.4 g of carbon sample was placed in a de-gassed sample cell and was de-gassed at 300 degrees Celsius under vacuum to remove adsorbed gases and moisture from the sample surface. The degassed sample was re-weighed and loaded onto the analysis station, where it was exposed to a further degas step under helium, followed by gaseous $CO_2$ at close to condensation temperatures (273 K) within the pressure range of 0.01 - 1 bar.

As the saturation pressure of $CO_2$ at 273 K is very high, low relative pressure measurements necessary for micropore analysis are achieved in the range of moderate absolute pressures (1-760 torr).

Following the gas sorption isotherm collection, it was subsequently processed using the Non-Linear Density Functional theory using a pre-paramatised kernel provided on the Quantachrome Instruments AutoSorb iQ3 Gas Sorption Analyser titled ("$CO_2$ adsorption on to carbon at 273 K".

<u>CHNS content determination by means of elemental analyser</u>

The carbon mass fraction, hydrogen fraction mass, nitrogen mass fraction and sulfur mass fraction (i.e. carbon weight fraction, hydrogen weight fraction, nitrogen weight fraction and sulfur weight fraction) are measured using an elemental analyser with thermal conductivity and infrared detector. The analyser is a device for the fully automatic and quantitative analysis of the above elements. The combustion tube is brought to a temperature of 1100 °C and the reduction tube to 850 °C. First, a blank measurement is conducted. The carbon peak area should have a value < 50, the hydrogen peak area a value < 300, the nitrogen peak area a value < 50 and the sulphur peak area a value < 350. Otherwise, the individual adsorption columns are heated and then empty measurements are started again. The blank measurement is calculated as follows:

$$b = \frac{\sum b_i}{n},$$

wherein b is the blank measurement, $b_i$ is the peak area of the respective blank measurement, n is the number of blank measurements, i is an index of 1 to n.

The compensation of the blank measurement is calculated as follows,

$$\text{acomp.} = a - b,$$

wherein acomp. Is the compensated peak area, a is the measured peak area, and b is the blank measurement value.

Next, the daily factor is measured. For this purpose, 3 mg of sulphanilamide and 3 mg of low-level standard (e.g. carbon black standard) are weighed into each of 8 tin capsules. After weighing out the respective sample, it is placed in the capsule press, overlaid with helium for 35 s and then cold-sealed. Subtracting the blank value, the known theoretical element concentration of the standard samples is put in relation to the actually calculated element concentration. This results in the daily factor, which must be between 0.9 - 1.1. If this is not the case, these measurements should be repeated with newly opened standards. Otherwise, a new calibration must be carried out according to the manufacturer's instructions.

The daily factor is calculated as follows,

$$f = \frac{c_{theor.}}{c_{act.}},$$

Wherein f is the daily factor, $c_{theor.}$ is the theoretical factor, $c_{act.}$ is the actual calculated elemental concentration.

Then, 8 tin capsules each containing 5 mg $\pm$ 1 mg of the desired measured component, such as rubber granulate, are weighed. After weighing the respective samples, they are placed in the capsule press, covered with helium for 35 s and then cold welded.

For the measurement, the combustion tube is enriched with $O_2$. The elements C, H, N and S burn to form $CO_2$, $H_2O$, NOx, $SO_2$ and $SO_3$. Halogen bound in the sample reacts to form volatile halogen compounds. In addition, there are $WO_3$ granules in the combustion tube that provide further $O_2$ as a catalyst, prevent the formation of nonvolatile sulphates and bind interfering alkali and alkaline earth elements. The carrier gas stream is fed into the reduction tube with Cu filling. Nitrogen oxides (NOx) are completely reduced to $N_2$ at the copper contact. $SO_3$ is reduced to $SO_2$. Volatile halogen compounds are bound to the silver wool.

$N_2$ is not adsorbed and enters the thermal conductivity detector as the first measuring component, $CO_2$, $H_2O$ and $SO_2$ are adsorbed on the respective adsorption columns.

Then, one after the other, the adsorption columns are brought to desorption temperature, so that $CO_2$, then $H_2O$ as carrier gas enters the thermal conductivity detector and $SO_2$ enters the infrared detector. Depending on the type and concentration of the components, the detector delivers an electrical signal which is digitised and integrated. The measurement signal is recorded as a function of time and displayed as an integral value. The absolute element content of the sample is calculated from this integral value of the individual measurement peaks and the calibration factors.

The element concentration is calculated according to the following equation

$$c = \frac{a * 100 * f}{w},$$

wherein c is the elemental concentration (in %), a is the absolute element content (in mg), f is the daily factor, and w is the actual amount of the sample.

O content determination by means of elemental analyser

Depending on the oxygen concentration, an electrical signal is transmitted from the thermal conductivity detector (WLD) of the elemental analyser to a micro controller and then displayed as an integral value. From the integral value of the measurement peaks and the calibration factor, the absolute element content of the sample is concluded.

The pyrolysis tube is heated to a temperature of 1050°C. First, a blank measurement is conducted. The oxygen peak area should have a maximum value of 200. If the blank value is not below 200, CO adsorption column should be heated up (260 °C, CO desorption 150 °C). After the blank values have been successfully measured, the mean value of the blank value areas is calculated.

The blank measurement is calculated as follows:

$$b = \frac{\sum b_i}{n},$$

wherein b is the blank measurement, $b_i$ is the peak area of the respective blank measurement, n is the number of blank measurements, i is an index of 1 to n.

Next, the daily factor is measured. For this purpose, 3 mg of acetanilide are weighed into each of 8 tin capsules. After weighing out the respective sample, it is placed in the capsule press, overlaid with helium for 35 s and then cold-sealed. Subtracting the blank value, the known theoretical element concentration of the standard samples is put in relation to the actually calculated element concentration. This results in the daily factor, which must be between 0.9 - 1.1. If this is not the case, these measurements should be repeated with newly opened standards. Otherwise, a new calibration must be carried out according to the manufacturer's instructions.

The daily factor is calculated as follows,

$$f = \frac{c_{theor.}}{c_{act.}},$$

wherein f is the daily factor, $c_{theor.}$ is the theoretical factor, $c_{act.}$ is the actual calculated elemental concentration.

Then, 8 tin capsules each containing 5 mg ±1 mg of the desired measured component, such as rubber granulate, are weighed. After weighing the respective samples, they are placed in the capsule press, covered with helium for 35 s and then cold welded. The samples are then measured.

The element concentration is calculated according to the following equation

$$c = \frac{a * 100 * f}{w},$$

wherein c is the elemental concentration (in %), a is the absolute element content (in mg), f is the daily factor, and w is the actual amount of the sample.

Determination of the mass concentration of Mineral oil hydrocarbons

(MOSH/POSH and MOAH) in Carbon black using HPLC/GC-FID

After the extraction of the hydrocarbons (see "Sample preparation and extraction"), the fraction containing MOSH/POSH is separated from the fraction containing MOAH using an online HPLC/GC coupling on a silica gel phase.

The final quantitative determination of both fractions is carried out by a Gaschromatograph (GC) with a flame ionization detector (FID). The following hydrocarbons can be recorded analytically within the scope of this test specification:

*Mineral oil saturated hydrocarbons and Polyolefin oligomeric saturated hydrocarbons (MOSH/POSH):* **MOSH:** Saturated hydrocarbons from mineral oil. These consist of paraffins (open-chain hydrocarbons) and naphthenes (cyclic hydrocarbons), which are usually highly alkylated and either come directly from petroleum or were formed through the hydrogenation of aromatics and other conversion processes during refining. **POSH:** Saturated hydrocarbons, which occur as oligomers from polyolefins (e.g. polyethylene, polypropylene) and related products in plastics and can be transferred to food. The MOSH and POSH hydrocarbons are not separated.

*Mineral oil aromatic hydrocarbons (MOAH):* Hydrocarbons from mineral oil that consist of highly alkylated mono- and/or polyaromatic rings. Saturated and aromatic rings can be present together in partially hydrogenated mineral oils. Hydrocarbons with at least one aromatic ring are included in the MOAH, even if they largely consist of saturated hydrocarbons.

Sample preparation and extraction:

The fiberglass or glass extraction sleeve required to extract the samples is cleaned beforehand. To do this, the sleeve is pre-extracted with cyclohexane for at least 24 hours (Soxhlet extraction with $N_2$ flushing of the condenser). The required glass wool and the extraction devices are also pre-extracted or cleaned with cyclohexane.

To control the influence of the blank value, the cleaned sleeve is extracted with cyclohexane after drying. This extract is processed in the same way as the sample, i.e. by adding 20 μL ISTD solution (see tables below) and concentrating the solvent to a final volume of 2.0 mL. After the sample has been homogenized, 3 g of carbon black are weighed into the extraction sleeve. After adding 20 μL ISTD solution (specified before extraction), the sleeve is closed with cleaned glass wool. The Soxhlet extraction is then carried out for 24 hours with $N_2$ flushing of the condenser with cyclohexane. After the extraction has been completed and cooled to room temperature, the concentration is carried out on a rotary evaporator/ Büchi Syncore to a final volume of 1 mL. 1.0 mL Cyclohexane is then added to the extract and the glass surface is rinsed with the solvent. For measurement, 50 μL of this solution is injected into the Online-HPLC/GC-FID system.

Fractionation and quantification:

For identification and quantification using online HPLC/GC-FID, the fractions of MOSH/POSH and MOAH separated on the normal phase HPLC are transferred to the gas chromatograph. The individual fractions are then chromatographically separated and quantified.

An internal standard solution with 9 substances (different saturated and aromatic hydrocarbons, see Tables 4i and 4ii) is spiked into each sample.

The quantitative calculation of the MOSH/POSH and MOAH fractions is carried out using the peak areas of the Humps or Unresolved Complex Mixture (UCM) for each fraction using the standards via their response factors. Due to the detection using FID, the response factors of the saturated hydrocarbons and the aromatic hydrocarbons are set equal.

For the MOSH/POSH fraction this is usually Bicyclohexyl (CyCy) and for the MOAH fraction it is tri - tert -butylbenzene (TBB) or 2-methylnaphthalene. If coelutions are recognizable, another ISTD is used as an alternative for quantification.

The individual fractions, belonging to the boiling point ranges are also quantified using the internal standards and included as results in the report.

The following results are noted and the total amount of MOSH/POSH and the total amount of MOAH are reported:

MOSH/POSH (C10-C50), total amount
MOSH/POSH (≥C10-≤C16)
MOSH/POSH (>C16-≥C20)
MOSH/POSH (>C20-≤C25)
MOSH/POSH (>C25-≤C35)
MOSH/POSH (>C35-≤C40)
MOSH/POSH (>C40-≤C50)
MOAH (C10-C50), total amount
MOAH (≥C10-≤C16)
MOAH (>C16-≤C25)
MOAH (>C25-≤C35)
MOAH (>C35-≤C50)
Chromatographic separation and detection:

HPLC analysis

To separate the MOSH and MOAH fractions using normal phase chromatography :
HPLC separation column: Restek , Allure Silica 5μm 250mm*2.1mm ID with guard column 30mm * 2.1mm ID

| | |
|---|---|
| Eluent A: | Hexane |
| Eluent B: | Dichloromethane |
| Flow: | 300 μl/min. |

Gradient program optimized for separating the MOSH/MOAH fractions
MOSH fractionation: approx. Start 2.0 min. Fraction length = 90 sec.
MOAH fractionation: approx. Start 4.0 min. Fraction length = 90 sec.
Backflush the HPLC column after 6.1 min.
GC analysis
Configuration and preparation of the device
Guard column retention gap:
Restek - MXT Siltek Guard Columm Dimension: Length 10m × 0.53mm ID, disabled
Separation column:
Restek MXT - 1 dimension: length 15 m × 0.25 mm ID; Film thickness 0.25 μm

| | |
|---|---|
| Carrier gas: | Hydrogen |
| Initial temperature: | 60°C |
| Hold time: | 6 min. |
| Oven program: | 20°C/min. to 370 °C Hold = 6.5 min. |
| Detector: | FID |
| detector Temperature : | 380°C |

FID gases: 30 mL/min Hydrogen,
25 mL/min make- up gas (Nitrogen)
300 mL /min Synthetic air Tables 4i and 4ii: ISTD composition (internal standard solution)

Table 4i: MOSH fraction (in elution order):

| Substance | CAS No. | Abbreviation | Concentration |
|---|---|---|---|
| n- Undecane | [1120-21-4] | (C11) | 300 μg / mL |
| Cyclohexylcyclohexane or Bicyclohexyl | [92-51-3] | (CyCy) | 300 μg/mL |
| n- Tridecanes | [629-50-5] | (C13) | 150 μg / mL |
| 5-alpha-Cholestane | [481-21-0] | (cho) | 600 μg / mL |

Table 4ii: MOAH fraction (in elution order):

| Substance | CAS No. | Abbreviation | Concentration |
|---|---|---|---|
| Pentylbenzene | [538-68-1] | (5B) | 300 μg / mL |
| 2-Methylnaphthalene | [91-57-6] | (2-MN) | 300 μg / mL |
| 1-Methylnaphthalene | [90-12-0] | (1-MN) | 300 μg / mL |
| 1,3,5-Tri-tert-butylbenzene | [1460-02-2] | (TBB) | 300 μg / mL |
| Perylene | [198-55-0] | (By) | 600 μg / mL |

**In-Rubber tests**

The rubber compositions are mentioned in table 5. The ESBR Buna SB 1500 was introduced to a laboratory mixer GK1.5E with an intermeshing PES5-rotor geometry made by Harburg Freudenberger and milled for 30 seconds at a

EP 4 582 512 A1

chamber temperature of 40°C, a fill factor of 0.66 and a rotor speed of 45 rpm. Subsequently, half of the carbon black volume, ZnO and stearic acid were added under milling. After 90 seconds the other half of the carbon black volume and the 6PPD were added. After further 90 secs the ram was lifted and cleaned, and the batch was mixed for another 90 seconds. The total mixing time in the internal mixer was 5 minutes and afterwards the batch was dropped on an open mill for cooling down and additional distributive mixing. The batch temperature did not exceed 160°C in the first mixing step. The batch was allowed to rest overnight.

During the second and final mixing step the sulfur and the accelerator (Vulkacit CZ/EG-Z) were then added in the indicated amounts to the master batch obtained from the first mixing step. The resulting mixture was milled in the GK1.5E mixer with a chamber temperature of 40°C and a fill factor of 0.64 for 2 minutes. The rotor speed was 30 rpm and it was secured that the batch temperature did not exceed 110 °C. Finally, the mixture was dropped from the internal mixer processed again on an open mill. The resulting vulcanizable compositions (green compounds) were cured between 11 and 13 minutes (Virgin carbon black: 11 min, Example 2A: 11 min, Commercial rCB A1: 13 min) at a temperature of 165 °C.

Table 5: The rubber compositions using different carbon blacks as noted below.

|  | Unit | Composition |
|---|---|---|
| Rubber[8] | phr | 100 |
| Carbon black[9] | phr | 50 |
| ZnO[10] | phr | 3 |
| Stearic Acid[11] | phr | 2 |
| 6PPD[12] | phr | 1 |
| Sulfur[13] | phr | 1.5 |
| CBS[14] | phr | 1.5 |
| [8]Rubber ESBR, Buna SB 1500, Resinex Deutschland GmbH<br>[9]Carbon black: Virgin carbon black, recovered carbon black of Example 2A or Commercial rCB A1 (see table 3)<br>[10]ZnO, ZNO RS RAL 844 C, Norkem B.V.<br>[11]Stearic Acid, Palmera B 1804, Caldic Deutschland GmbH<br>[12]6PPD, VULKANOX 4020/LG, Brenntag GmbH<br>[13]Sulfur, MAHLSCHWEFEL 80/90° unbeölt, Avokal GmbH<br>[14]CBS, VULKACIT CZ/EG-C, Lanxess N.V. | | |

The properties of the specimens are indicated in table 6.

Table 6: Properties of the specimens including the respective carbon black.

| Carbon black | Virgin carbon black | Ex. 2A | Commercial rCB A1 |
|---|---|---|---|
| Tensile Strength[15]/ MPa | 21.4 | 22.5 | 21.1 |
| Elongation at Break[16] /% | 519 | 667 | 612 |
| Abrasion[17] / mm$^3$ | 94 | 112 | 128 |
| Tear Resistance[18] (GRAVES) / N/mm | 19.3 | 20.5 | 17.1 |
| Topography relative peak area[19] / % | 0.55 | 0.74 | 15 |
| Peak Count [19] 25$\mu$m | 10.5 | 28 | 305.5 |
| Peak Count[19] 5-10$\mu$m | 3 | 2 | 6 |
| Peak Count[19] 10-15$\mu$m | 0 | 0 | 1.5 |

(continued)

| Carbon black | Virgin carbon black | Ex. 2A | Commercial rCB A1 |
|---|---|---|---|
| Mooney Viscosity / ME[20] | 57 | 62 | 65 |

[15]Tensile Strength was measured ISO 37 - 2012, S2.
[16]Elongation at Break was measured ISO 37 - 2012, S2.
[17]Abrasion was measured at 23 °C DIN ISO 4649:2014-03, 10 N.
[18]Tear Resistance GRAVES was measured DIN ISO 34-1:2016-09, method B, variant (b).
[19]The relative peak area was measured as described below.
[20]Mooney viscosity was measured according to ISO 289-1:2015.

As can be seen from table 6, the carbon black according to example 2A reveals improved in-rubber properties compared to a commercially available recovered carbon black that was not de-coked. The tensile strength, elongation at break and the tear resistance is even better compared to virgin carbon black.

The topography relative peak area tests a surface of a polymer which has filler dispersed. A topographic surface is produced which measures any defects in the polymer. Less peak counts mean a better dispersed filler and thus, a higher performance compound. The topography relative peak area of example 2A is significantly lower compared to commercially available recovered carbon black A1 and comparable to virgin carbon black. Commercially available recovered carbon black A1 has large number of cemented aggregated which form clusters up to 2-15 $\mu$m. The carbon blacks treated by the method according to the present invention comprises significantly lower counts of the aforementioned clusters.

The intrinsic viscosity of the polymer containing the commercially available recovered carbon black is very high. A high viscosity reduced the amount of mixing that a compounder can achieve. In comparison, the carbon black according to example 2A has a much lower viscosity so that more carbon black material can be dispersed.

In sum, the method according to the present invention reveals improved processing (i.e., lower viscosity), improved dispersion (lower peak areas in topography methods), therefore producing a stronger (higher tensile strength), stiffer (higher modulus 300%), and more tear resistant compound than that filled by commercially available alternative rCb materials.

**Topography relative peak area**

Topography relative peak area is a measure for filler dispersion determined by means of surface topography, inclusive of Medalia correction, according to the procedure described in A. Wehmeier, "Filler Dispersion Analysis by Topography Measurements", Technical Report TR 820, Degussa GmbH as well as in A. Wehmeier, "Entwicklung eines Verfahrens zur Charakterisierung der Füllstoffdispersion in Gummimischungen mittels einer Oberflachentopographie", Thesis, 1998 at the Münster University of Applied Sciences, and DE 199 17975 C2.

It will be appreciated that various modifications can be made, and that many changes can be made in the preferred embodiments without departing from the principle of the invention.

**Claims**

1.  A multi-layered pyrolysis reactor (100) for the heat treatment of a rubber granulate (101), having a pyrolysis zone (180) and a gasification zone (182), wherein the reactor (100) comprises:

    (A) multiple hearths (130, 131),
    (B) a rotating central shaft (112),
    (C) rabble arms (140) provided with rabble tines (141) above each hearth (130, 131) and rotated by the rotating central shaft (112), the at least one rabble arm (140) and multiple hearths (130, 131) are configured to transfer the material radially along each hearth in an alternating inward and outward direction to affect a downward cascading of the material from one hearth to the next hearth therebelow,
    (D) an upper inlet (110) for the rubber granulate (101) configured to provide rubber granulate on the uppermost hearth,
    (E) a heating unit (170), wherein the heating unit (170) is configured to heat the material to 360 to 740 °C in the pyrolysis zone (180), wherein the heating unit (170) is selected from an electrical heating unit (170) and/or a microwave heating unit,
    (F) a burner (173) for each hearth in the gasification zone (182), configured to heat the material to 750 to 950 °C.

2. The multi-layered pyrolysis reactor (100) according to claim 1, wherein the reactor comprises a steam inlet (174) provided at the lowermost hearth in the gasification zone (182), and/or wherein the reactor comprises a steam outlet (175) that is configured to remove steam before the steam reaches the pyrolysis zone (180).

3. The multi-layered pyrolysis reactor (100) according to anyone of claims 1 or 2, wherein the reactor comprises 2 to 20 hearths, preferably 4 to 15 hearths, more preferably 6 to 12 hearths, even more preferably 6 to 10 hearths, and most preferably 7 to 8 hearths.

4. The multi-layered pyrolysis reactor (100) according to anyone of the preceding claims, wherein pyrolysis zone is the zone in which the heating unit (170) heats the material on each hearth to 360 to 740 °C, and/or gasification zone is the zone in which the burner(s) heat(s) the material on each hearth to 750 to 950 °C.

5. The multi-layered pyrolysis reactor (100) according to anyone of the preceding claims, wherein the heating unit (170) is an electrical heating unit (170), preferably wherein pyrolysis zone is the zone in which the electrical heating unit (170) heats the material on each hearth to 360 to 740 °C, and/or gasification zone is the zone in which the burner(s) heat(s) the material on each hearth to 750 to 950 °C.

6. The multi-layered pyrolysis reactor (100) according to anyone of the preceding claims, wherein the two uppermost hearths defining the pyrolysis zone, preferably in which the electrical heating unit heats the material on each hearth to 360 to 740 °C.

7. The multi-layered pyrolysis reactor (100) according to anyone of the preceding claims, wherein the four lowermost hearths defining the gasification zone, preferably in which the burner (173) for each hearth heats the material on each hearth to 750 to 950 °C.

8. The multi-layered pyrolysis reactor (100) according to anyone of the preceding claims, wherein a buffer hearth is present defining a buffer zone between the pyrolysis zone and the gasification zone, wherein multi-layered pyrolysis reactor (100) comprises a burner for each hearth in the buffer zone, wherein preferably each burner for each hearth in the buffer zone is an oxy-fuel burner.

9. The multi-layered pyrolysis reactor (100) according to anyone of the preceding claims, wherein the heating unit (170) comprises a microwave heating unit, wherein a microwave heating unit is present for each hearth in the pyrolysis zone (180), configured to heat the material to 360 to 740 °C.

10. The multi-layered pyrolysis reactor (100) according to anyone of the preceding claims, wherein each burner (173) for each hearth in the gasification zone (182) is a hydrogen-oxygen burner and/or wherein each burner (173) for each hearth in the gasification zone (182) is an oxy-fuel burner.

11. The multi-layered pyrolysis reactor (100) according to anyone of the preceding claims, wherein the number of rabble arms (140) provided with rabble tines (141) above each hearth (130, 131)

(i) is from 1 to 5, preferably 1 to 4, such as 1, 2, 3 or 4, and/or
(ii) in the pyrolysis zone is 1 to 5, preferably 1 to 3, most preferably 2 to 3, and/or
(ii) in the buffer zone is 1 to 5, preferably 1 to 3, most preferably 2 to 3, and/or
(ii) in the gasification zone is 1 to 5, preferably 1 to 2, most preferably 1.

12. A method for the heat treatment of a rubber granulate using a reactor according to any one of the preceding claims, comprising pyrolysis of rubber granulate at a temperature of 360 °C to 740 °C and in the absence of oxygen, wherein a pyrolysis gas stream and a pyrolyzed carbon black-containing particulate is obtained, gasification of the pyrolyzed carbon black-containing particulate at a temperature of 750 °C to 950 °C, obtaining treated carbon black after the gasification.

13. Use of the reactor according to any one of claims 1 to 11 for the pyrolysis of rubber granulate and the subsequent gasification.

14. Treated carbon black, wherein the treated carbon black has a cumulative pore volume for pore sizes of 0.3 to 0.75 nm of 0.008 to 0.035 $cm^3/g$, preferably 0.009 to 0.025 $cm^3/g$, more preferably 0.0101 to 0.020 $cm^3/g$, even more preferably 0.011 to 0.0185 $cm^3/g$, and most preferably 0.011 to 0.015 $cm^3/g$, wherein the cumulative pore volume is determined as mentioned in the specification.

**15.** A rubber article comprising carbon black comprising coke, wherein the rubber article has a topography relative peak area of less than 10 %, preferably less than 5 %, more preferably less than 2 %, and most preferably less than 1 %, wherein the topography relative peak area is measured as described in the specification.

FIG. 1

FIG. 2

| | Europäisches Patentamt European Patent Office Office européen des brevets | **EUROPEAN SEARCH REPORT** | Application Number EP 24 19 2594 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/125782 A1 (KUMOH NAT INST TECHNOLOGY IND ACAD COOP FOUND [KR]) 24 June 2021 (2021-06-24) * examples 1-3 * ----- | 14 | INV. C10B53/07 C10B7/02 C10B19/00 C10B49/02 |
| X | CN 111 306 934 A (SHAOXING HEYUAN ENVIRONMENTAL TECH CO LTD) 19 June 2020 (2020-06-19) | 1-11 | C10J3/62 C09C1/48 F27B9/14 |
| Y | * examples 1, 2 * * paragraph [0046] * * figures 1-3 * ----- | 12,13 | F27B9/18 F27D3/04 F27B9/06 |
| Y | WO 2023/164504 A1 (IGNEO IP LLC [US]) 31 August 2023 (2023-08-31) * paragraphs [0055], [0057], [0060], [0104] - [0110] * * claims 1,16 * * figure 1 * ----- | 1-13 | |
| Y | WO 2011/047068 A1 (REKLAIM INC [US]; HORN JOEL [US] ET AL.) 21 April 2011 (2011-04-21) * paragraphs [0023] - [0030] * * figure 1 * ----- | 1-13 | TECHNICAL FIELDS SEARCHED (IPC) C10B C10J C09C |
| Y | US 2010/154728 A1 (KEMPER JOERG [DE] ET AL) 24 June 2010 (2010-06-24) * paragraphs [0050], [0058], [0065] * * claims 1-4 * * figures 1-3 * ----- -/-- | 1-13 | C10G F27B H05B |

The present search report has been drawn up for all claims

| Place of search | Date of completion of the search | Examiner |
|---|---|---|
| Munich | 10 January 2025 | Baumlin, Sébastien |

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GONZALEZ ET AL: "Preparation of activated carbons from used tyres by gasification with steam and carbon dioxide", APPLIED SURFACE SCIENCE, ELSEVIER, AMSTERDAM , NL, vol. 252, no. 17, 30 June 2006 (2006-06-30), pages 5999-6004, XP005531033, ISSN: 0169-4332, DOI: 10.1016/J.APSUSC.2005.11.029 * page 6000, paragraphs 2.1 and 2.2 * | 12,13 | |
| A | COSTA SEBASTIÃO M. R. ET AL: "Production and Upgrading of Recovered Carbon Black from the Pyrolysis of End-of-Life Tires", MATERIALS, vol. 15, no. 6, 9 March 2022 (2022-03-09), page 2030, XP093080229, DOI: 10.3390/ma15062030 * the whole document * | 1-14 | |

TECHNICAL FIELDS
SEARCHED     (IPC)

The present search report has been drawn up for all claims

| Place of search | Date of completion of the search | Examiner |
|---|---|---|
| Munich | 10 January 2025 | Baumlin, Sébastien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

| | |
|---|---|
| Europäisches Patentamt<br>European Patent Office<br>Office européen des brevets | **Application Number**<br><br>EP 24 19 2594 |

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1 - 14

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

The Search Division considers that the present European patent application does not comply with the requirements of unity of invention and relates to several inventions or groups of inventions, namely:

1. claims: 1-14

   Pyrolysis reactor, method for treating rubber granulate and treated carbon black.

1.1. claims: 1-13

   A pyrolysis reactor and method for treatment of rubber granulate to produce a treated carbon black, and use of said reactor to produce a treated carbon black.

1.2. claim: 14

   A treated carbon black having a specific cumulative pore volume for pore sizes of 0.3-0.75 nm.
   - - -

2. claim: 15

   A rubber article comprising carbon black, coke and having a specific topography relative peak area.
   - - -

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 24 19 2594

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2025

| Patent document cited in search report | Publication date | Patent family member(s) | Publication date |
|---|---|---|---|
| WO 2021125782 A1 | 24-06-2021 | KR    102153241 B1 | 07-09-2020 |
| | | WO    2021125782 A1 | 24-06-2021 |
| CN 111306934 A | 19-06-2020 | NONE | |
| WO 2023164504 A1 | 31-08-2023 | FR    3132857 A1 | 25-08-2023 |
| | | WO    2023164504 A1 | 31-08-2023 |
| WO 2011047068 A1 | 21-04-2011 | CA    2776547 A1 | 21-04-2011 |
| | | CN    102770509 A | 07-11-2012 |
| | | CN    104650932 A | 27-05-2015 |
| | | EP    2488605 A1 | 22-08-2012 |
| | | ES    2795004 T3 | 20-11-2020 |
| | | HK    1206054 A1 | 31-12-2015 |
| | | PL    2488605 T3 | 25-01-2021 |
| | | US    2011083953 A1 | 14-04-2011 |
| | | US    2015139889 A1 | 21-05-2015 |
| | | WO    2011047068 A1 | 21-04-2011 |
| US 2010154728 A1 | 24-06-2010 | AR    059536 A1 | 09-04-2008 |
| | | BR    PI0706811 A2 | 05-04-2011 |
| | | CA    2642590 A1 | 23-08-2007 |
| | | DE 102006007458 A1 | 06-09-2007 |
| | | EP    1991641 A1 | 19-11-2008 |
| | | US    2010154728 A1 | 24-06-2010 |
| | | WO    2007093428 A1 | 23-08-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020117388 A1

- DE 19917975 C2

**Non-patent literature cited in the description**

- **J.-B. DONNET et al.** Carbon Black:Science and Technology
- **SUDIP K. SAMANTA** ; **OM V. SINGH** ; **RAKESH K. JAIN**. Polycyclic aromatic hydrocarbons: environmental pollution and bioremediation. *TRENDS in Biotechnology*, June 2002, vol. 20 (6), 243-248

- **A. WEHMEIER**. Filler Dispersion Analysis by Topography Measurements. *Technical Report TR 820*
- Entwicklung eines Verfahrens zur Charakterisierung der Füllstoffdispersion in Gummimischungen mittels einer Oberflachentopographie. **A. WEHMEIER**. Thesis. Münster University of Applied Sciences, 1998